# EUROPEAN PATENT APPLICATION

(11) **EP 4 836 229 A1**
(43) Date of publication of application: **04.11.2026**
(21) Application number: 24912483.5
(22) Date of filing: 16.12.2024
(51) Int. Cl.: H02J 7/00

(54) **BATTERY PROTECTION SYSTEM**

(30) Priority: 26.12.2023 JP 2023219611
(71) Applicant: KUBOTA CORPORATION, Osaka-shi, Osaka 530-0011 (JP)
(72) Inventor: FUKUMURA, Takashi, Sakai-shi, Osaka 590-0908 (JP); OCHI, Yuichi, Sakai-shi, Osaka 590-0908 (JP); FUJITA, Toshiaki, Sakai-shi, Osaka 590-0908 (JP); YAMAGUCHI, Akifumi, Sakai-shi, Osaka 590-0908 (JP); HARADA, Ryo, Sakai-shi, Osaka 590-0908 (JP)
(74) Representative: Cabinet Beau de Loménie
(86) International application number: PCT/JP2024/044430
(87) International publication number: WO 2025/142594

(57) **Abstract**

In order to effectively prevent battery depletion in an agricultural machine (1), a battery protection system (100) includes a controller (21, 6a, 31) configured or programmed to determine whether or not a first time period has elapsed with an agricultural machine (1) in a non-operating state, the agricultural machine (1) being configured to actuate at least one electrical component (6, 7, 8) by electric power stored in a battery (4), and an output interface (34) to, when the controller (21, 6a, 31) determines that the first time period has elapsed, output, to a user, alert information to prompt the user to electrically disconnect the at least one electrical component (6, 7, 8) and the battery (4).

## Description

### Technical Field

The present invention relates to a technology to prevent battery depletion (battery overdischarge) in an agricultural machine.

### Background Art

For example, PTL 1 discloses a technology for preventing battery depletion in an agricultural machine that may remain unused for an extended period of time. In a remote monitoring system disclosed in PTL 1, a controller of an agricultural working vehicle, a management server of a management center, and a user terminal are configured to communicate with each other through communication devices. The agricultural working vehicle includes a position detector, battery voltage detecting means, and time measuring means, which are connected to the controller. During a power-saving standby mode in which a key switch of the agricultural working vehicle is in an OFF state, the controller automatically activates at a set time in response to a start instruction from the management center and transmits information including the current position of the agricultural working vehicle, the battery voltage, and the date and time to the management server through the communication device. Remote monitoring means included in the management server issues a notification prompting a relevant person to charge the battery when the battery voltage falls below a set value.

### Citation List

### Patent Literature

PTL 1: Japanese Unexamined Patent Application Publication No. 2016-76801

### Summary of Invention

### Technical Problem

When a user does not need to use an agricultural machine immediately, the user often does not charge a battery even after receiving a notification prompting the user to charge the battery, and battery depletion is therefore likely to occur. Furthermore, if the user charges the battery and the agricultural machine is then left unused, the battery may self-discharge or electric power stored in the battery may be consumed by electrical components of the agricultural machine. As a result, the stored electric power is wasted, which is inefficient.

In response to the above issue, it is an object of the present invention to efficiently prevent battery depletion in an agricultural machine.

### Solution to Problem

In order to attain the above technical object, a battery protection system according to the present invention includes a controller configured or programmed to determine whether or not a first time period has elapsed with an agricultural machine in a non-operating state, the agricultural machine being configured to actuate at least one electrical component by electric power stored in a battery, and an output interface to, when the controller determines that the first time period has elapsed, output, to a user, alert information to prompt the user to electrically disconnect the at least one electrical component and the battery.

In an example embodiment of the present invention, the controller may be configured or programmed to determine whether or not the first time period has elapsed since at least one of a prime mover or an electric power generator of the agricultural machine entered the non-operating state, without the at least one of the prime mover or the electric power generator entering an operating state, the electric power generator being configured to generate electric power to be stored in the battery.

In an example embodiment of the present invention, the battery protection system may further include a key switch to be operated to an ON state to cause the agricultural machine to operate and to be operated to an OFF state to not cause the agricultural machine to operate. The controller may be configured or programmed to determine whether or not the first time period has elapsed since the key switch was switched to the OFF state, without the key switch being switched to the ON state.

In an example embodiment of the present invention, the controller may be configured or programmed to determine whether or not the first time period has elapsed since the key switch was switched to the OFF state with the battery electrically connected to the at least one electrical component, without the battery being electrically disconnected from the at least one electrical component and without the key switch being switched to the ON state.

In an example embodiment of the present invention, the controller may be configured or programmed to measure an elapsed time period that has elapsed since the key switch was switched to the OFF state, and stop measuring the elapsed time period each of (i) when, while the key switch is in the OFF state, the battery enters a disconnected state in which the battery is electrically disconnected from the at least one electrical component and (ii) when the key switch is switched to the ON state.

In an example embodiment of the present invention, the controller may be configured or programmed to measure an elapsed time period that has elapsed since the battery entered a connected state from the disconnected state with the key switch in the OFF state, the connected state being a state in which the battery is electrically connected to the at least one electrical component, and determine whether or not the elapsed time period is equal to or more than the first time period.

In an example embodiment of the present invention, the controller may be configured or programmed to, after determining that the first time period has elapsed, cause the output interface to output the alert information upon each elapse of a second time period while the battery is connected to the at least one electrical component and the key switch is in the OFF state.

In an example embodiment of the present invention, the output interface may be configured to output the alert information including at least one of (i) an indication that the agricultural machine has not been determined to be in an operating state for a certain period of time or (ii) an indication that the battery is likely to be overdischarged.

In an example embodiment of the present invention, the output interface may be configured to output the alert information including at least one of (i) an elapsed time period that has elapsed since the agricultural machine entered the non-operating state or (ii) date and time at which the controller determined that the first time period elapsed.

In an example embodiment of the present invention, the battery protection system may further include a communication controller provided in or on the agricultural machine and configured or programmed to perform wireless communication, a terminal including a user interface which is the output interface and configured to be used by the user, and a server including the controller and configured to communicate with the communication controller and the terminal. The communication controller may be configured or programmed to transmit, to the server, key-ON data indicating that the key switch provided in or on the agricultural machine has been switched to the ON state and key-OFF data indicating that the key switch has been switched to the OFF state. The controller may be configured or programmed to determine whether or not the first time period has elapsed since the server received the key-OFF data without the server receiving the key-ON data, and, when the first time period has elapsed, transmit the alert information from the server to the terminal. The terminal may be configured to receive the alert information and cause the user interface to output the alert information.

In an example embodiment of the present invention, the battery protection system may further include an information processor provided in or on the agricultural machine. The information processor may be configured or programmed to transmit key-ON-detection information to the communication controller when the key switch is switched to the ON state, and transmit key-OFF-detection information to the communication controller when the key switch is switched to the OFF state. The communication controller may be configured or programmed to transmit the key-ON data at least one of when the communication controller receives a key-ON signal that the key switch in the ON state outputs or when the communication controller receives the key-ON-detection information, and transmit the key-OFF data at least one of when the communication controller receives a key-OFF signal that the key switch in the OFF state outputs or when the communication controller receives the key-OFF-detection information.

In an example embodiment of the present invention, the communication controller may be configured or programmed to transmit, to the server, battery connection data indicating that the battery is in a connected state in which the battery is electrically connected to the at least one electrical component and battery disconnection data indicating that the battery is in a disconnected state in which the battery is electrically disconnected from the at least one electrical component. The controller may be configured or programmed to determine whether or not the first time period has elapsed since the server received the key-OFF data without the server receiving the key-ON data or the battery disconnection data.

In an example embodiment of the present invention, the battery protection system may further include an information processor provided in or on the agricultural machine. The information processor may be configured or programmed to transmit connection-detection information to the communication controller when the information processor detects from a state of electric power supply from the battery that the battery is in the connected state, and transmit disconnection-detection information to the communication controller when the information processor detects from the state of electric power supply from the battery that the battery is in the disconnected state. The communication controller may be configured or programmed to transmit the battery connection data at least one of when the communication controller detects from the state of electric power supply from the battery that the battery is in the connected state or when the communication controller receives the connection-detection information, and transmit the battery disconnection data at least one of when the communication controller detects from the state of electric power supply from the battery that the battery is in the disconnected state or when the communication controller receives the disconnection-detection information.

In an example embodiment of the present invention, in the battery protection system, the controller may be configured or programmed to determine whether or not, after the server received the key-ON data, a time condition is satisfied without the server receiving the key-OFF data, and, when the time condition is satisfied, estimate that the key switch has been switched to the OFF state and determine whether or not the first time period has elapsed.

In an example embodiment of the present invention, the battery protection system may further include an auxiliary battery provided in or on the agricultural machine and configured to supply electric power to the communication controller.

In an example embodiment of the present invention, the auxiliary battery may be contained in the communication controller.

In an example embodiment of the present invention, the battery protection system may further include a communication controller provided in or on the agricultural machine and configured or programmed to perform wireless communication, and a terminal including a user interface which is the output interface and configured to be used by the user. The key switch and the controller may be provided in or on the agricultural machine. The controller may be configured or programmed to cause the communication controller to transmit the alert information when the first time period has elapsed since the key switch was switched to the OFF state without the key switch being switched to the ON state. The terminal may be configured to receive the alert information and cause the user interface to output the alert information.

In an example embodiment of the present invention, the battery protection system may further include an information processor provided in or on the agricultural machine. The key switch may be configured to output a key-ON signal to the controller and the information processor when the key switch is in the ON state, and output a key-OFF signal to the controller and the information processor when the key switch in the OFF state. The information processor may be configured or programmed to detect from the key-ON signal that the key switch has been switched to the ON state and transmit key-ON-detection information to the controller, and detect from the key-OFF signal that the key switch has been switched to the OFF state and transmit key-OFF-detection information to the controller.

In an example embodiment of the present invention, the controller may be configured or programmed to detect whether the battery is in a connected state in which the battery is electrically connected to the at least one electrical component or in a disconnected state in which the battery is electrically disconnected from the at least one electrical component, and, when the first time period has elapsed with the battery in the connected state and the key switch in the OFF state, cause the communication controller to transmit the alert information.

In an example embodiment of the present invention, the battery protection system may further include an information processor provided in or on the agricultural machine. The information processor may be configured or programmed to transmit connection-detection information to the communication controller when the information processor detects from a state of electric power supply from the battery that the battery is in the connected state, and transmit disconnection-detection information to the communication controller when the information processor detects from the state of electric power supply from the battery that the battery is in the disconnected state. The controller may be configured or programmed to detect whether the battery is in the connected state or in the disconnected state from the connection-detection information or the disconnection-detection information, and detect whether the battery is in the connected state or in the disconnected state from the state of electric power supply from the battery.

In an example embodiment of the present invention, the controller may be provided in the communication controller.

In an example embodiment of the present invention, the battery protection system may further include a communication controller provided in or on the agricultural machine and configured or programmed to perform wireless communication, and a terminal including the controller and a user interface which is the output interface and configured to be used by the user. The communication controller may be configured or programmed to transmit key-ON data indicating that the key switch provided in or on the agricultural machine has been switched to the ON state and key-OFF data indicating that the key switch has been switched to the OFF state. The controller may be configured or programmed to determine whether or not the first time period has elapsed since the terminal received the key-OFF data without the terminal receiving the key-ON data, and, when the first time period has elapsed, cause the user interface to output the alert information.

In an example embodiment of the present invention, the battery protection system may further include an information processor provided in or on the agricultural machine. The information processor may be configured or programmed to transmit key-ON-detection information to the communication controller when the key switch is switched to the ON state, and transmit key-OFF-detection information to the communication controller when the key switch is switched to the OFF state. The communication controller may be configured or programmed to transmit the key-ON data at least one of when the communication controller receives a key-ON signal that the key switch in the ON state outputs or when the communication controller receives the key-ON-detection information, and transmit the key-OFF data at least one of when the communication controller receives a key-OFF signal that the key switch in the OFF state outputs or when the communication controller receives the key-OFF-detection information.

In an example embodiment of the present invention, the communication controller may be configured or programmed to transmit battery connection data indicating that the battery is in a connected state in which the battery is electrically connected to the at least one electrical component and battery disconnection data indicating that the battery is in a disconnected state in which the battery is electrically disconnected from the at least one electrical component. The controller may be configured or programmed to determine whether or not the first time period has elapsed since the terminal received the key-OFF data without the terminal receiving the key-ON data or the battery disconnection data.

In an example embodiment of the present invention, the battery protection system may further include an information processor provided in or on the agricultural machine. The information processor may be configured or programmed to transmit connection-detection information to the communication controller when the information processor detects from a state of electric power supply from the battery that the battery is in the connected state, and transmit disconnection-detection information to the communication controller when the information processor detects from the state of electric power supply from the battery that the battery is in the disconnected state. The communication controller may be configured or programmed to transmit the battery connection data at least one of when the communication controller detects from the state of electric power supply from the battery that the battery is in the connected state or when the communication controller receives the connection-detection information, and transmit the battery disconnection data at least one of when the communication controller detects from the state of electric power supply from the battery that the battery is in the disconnected state or when the communication controller receives the disconnection-detection information.

In an example embodiment of the present invention, in the battery protection system, the controller may be configured or programmed to determine whether or not, after the terminal received the key-ON data, a time condition is satisfied without the terminal receiving the key-OFF data, and, when the time condition is satisfied, estimate that the key switch has been switched to the OFF state and determine whether or not the first time period has elapsed.

### Advantageous Effects of Invention

According to the present invention, battery depletion in the agricultural machine can be efficiently prevented.

### Brief Description of Drawings

[FIG. 1] FIG. 1 is a diagram illustrating the configuration of a battery protection system.
[FIG. 2] FIG. 2 is a diagram illustrating essential components of an agricultural machine.
[FIG. 3] FIG. 3 is a diagram illustrating essential components of a management server.
[FIG. 4] FIG. 4 is a diagram illustrating essential components of a user terminal.
[FIG. 5A] FIG. 5A is a partial flowchart illustrating an example detection operation of a communication controller of the agricultural machine in a first example embodiment.
[FIG. 5B] FIG. 5B is a continuation of the flowchart of FIG. 5A.
[FIG. 6] FIG. 6 is a flowchart illustrating an example monitoring operation of the management server in the first example embodiment.
[FIG. 7] FIG. 7 is a flowchart illustrating an example alert operation of the user terminal in the first example embodiment.
[FIG. 8] FIG. 8 is a diagram illustrating an example of displayed alert information.
[FIG. 9A] FIG. 9A is a partial flowchart illustrating an example monitoring operation of the management server in a second example embodiment.
[FIG. 9B] FIG. 9B is a continuation of the flowchart of FIG. 9A.
[FIG. 10] FIG. 10 is a diagram illustrating an example of displayed first alert information.
[FIG. 11] FIG. 11 is a diagram illustrating an example of displayed second or subsequent alert information.
[FIG. 12A] FIG. 12A is a partial flowchart illustrating an example monitoring operation of the communication controller of the agricultural machine in a third example embodiment.
[FIG. 12B] FIG. 12B is a continuation of the flowchart of FIG. 12A.
[FIG. 13] FIG. 13 is a flowchart illustrating an example transfer operation of the management server in a fourth example embodiment.
[FIG. 14A] FIG. 14A is a partial flowchart illustrating an example monitoring operation of the user terminal in the fourth example embodiment.
[FIG. 14B] FIG. 14B is a continuation of the flowchart of FIG. 14A.

### Description of Embodiments

Example embodiments of the present invention will be described below with reference to the drawings. It should be noted that, for the sake of convenience, like reference numerals designate identical or corresponding elements.

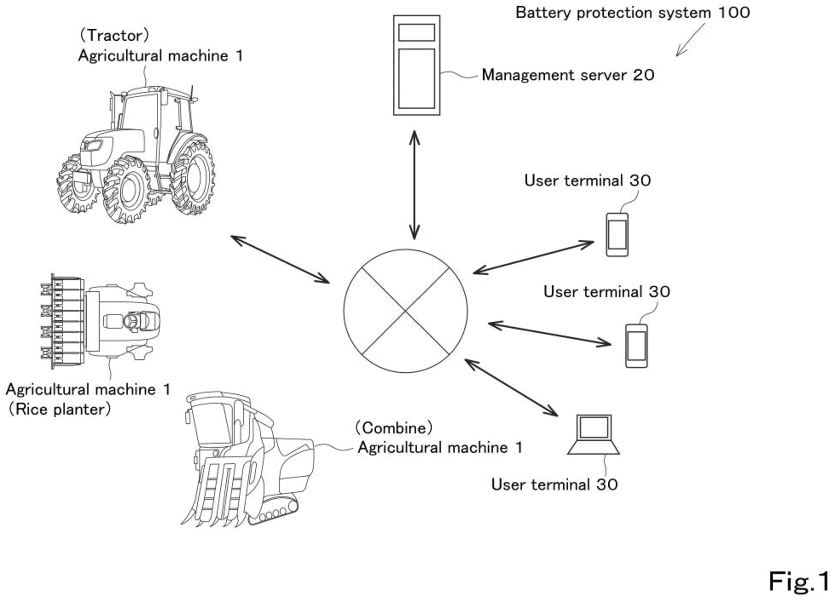

FIG. 1 is a diagram illustrating the configuration of a battery protection system 100 according to the present example embodiment. The battery protection system 100 includes at least one agricultural machine 1, a management server 20, and at least one user terminal 30, and is configured to protect a battery mounted in the agricultural machine 1.

The agricultural machine 1 is a machine configured to perform agricultural work while traveling in an agricultural field and is also referred to as an agricultural working vehicle or an agricultural vehicle. Although FIG. 1 illustrates a tractor, a rice planter, and a combine as the agricultural machines 1, the types and number of agricultural machines 1 are not limited to those in the example illustrated in FIG. 1. Each of the agricultural machines 1 is used during a specific farming period and may remain unused for an extended period of time (one month or longer).

The management server 20 is installed at a management center or the like. The management server 20 manages information on the agricultural machine 1, information on agricultural work that is performed using the agricultural machine 1, data on agricultural fields where agricultural work is performed, data on a user, and the like.

The user terminal 30 is a terminal used by, for example, the user using the agricultural machine 1. Specifically, the user terminal 30 includes any of a smartphone, a tablet device, a portable computer, a stationary computer, and the like. The number of user terminals 30 is not limited to that in the example illustrated in FIG. 1.

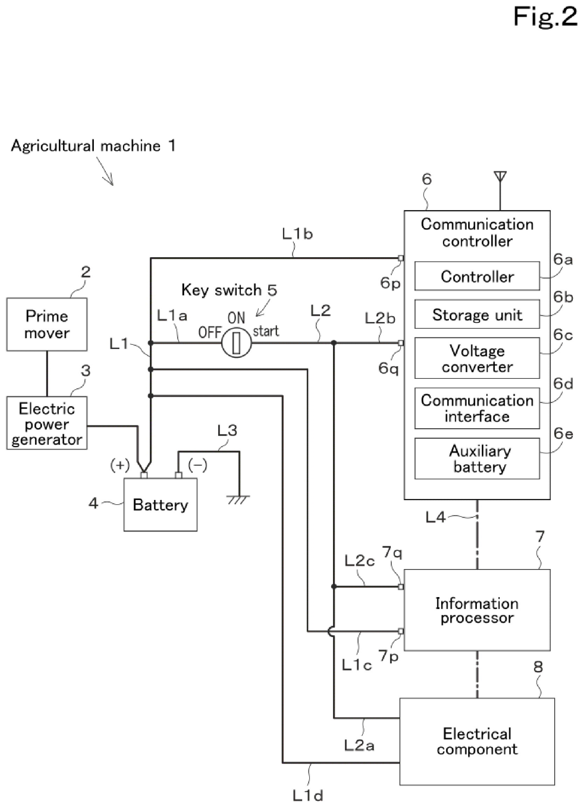

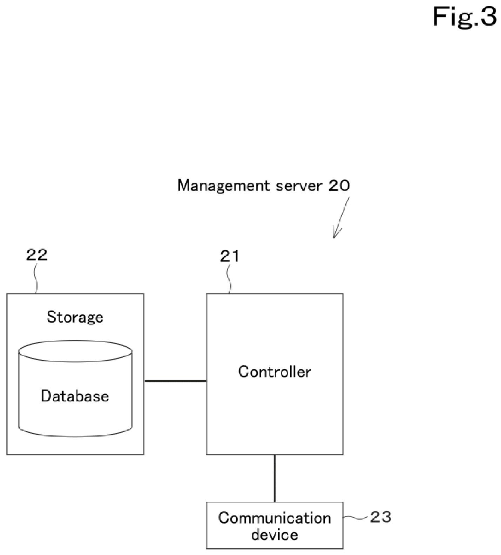

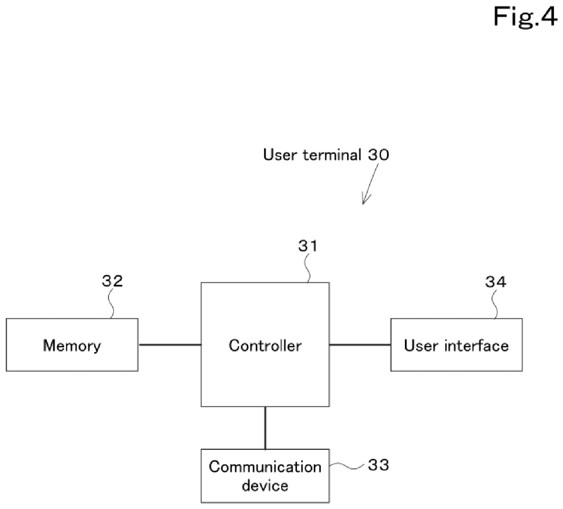

The agricultural machine 1 includes a communication controller 6 (FIG. 2), the management server 20 includes a communication device 23 (FIG. 3), and the user terminal 30 includes a communication device 33 (FIG. 4). The agricultural machine 1, the management server 20, and the user terminal 30 are configured to communicate wirelessly with each other through the communication controller 6 and the communication devices 23 and 33 via, for example, a mobile communication network and the Internet or to communicate wirelessly directly with each other. The communication between them is performed using at least one of a mobile communication system, such as Long Term Evolution (LTE) (registered trademark), Third Generation (3G), Fourth Generation (4G), or Fifth Generation (5G), or a short-range wireless communication system, such as Wi-Fi (registered trademark) or Bluetooth (registered trademark) Low Energy.

The above-described communication systems are merely examples. The agricultural machine 1, the management server 20, and the user terminal 30 may communicate with each other using a communication system other than the above-described communication systems.

FIG. 2 is a diagram illustrating essential components of the agricultural machine 1. The agricultural machine 1 includes a prime mover 2, an electric power generator 3, a battery 4, a key switch 5, the communication controller 6, an information processor 7, and at least one other electrical component 8. Among these components, the communication controller 6, the information processor 7, and the electrical component 8 are electrically connected via an in-vehicle network such as CAN, LIN, or FlexRay provided in the agricultural machine 1. The communication controller 6 and the information processor 7 are also electrical components of the agricultural machine 1.

The prime mover 2 is a power source of the agricultural machine 1. In the present example, the prime mover 2 is an engine (e.g., a diesel engine or a gasoline engine); however, the prime mover 2 may alternatively be configured as another power source such as an electric motor. The prime mover 2 is controlled by an engine electronic control unit (ECU) (not illustrated) such that start, stop, and rotation speed of the prime mover 2 are controlled.

The electric power generator 3 is, for example, an alternator and is driven by power from the prime mover 2 or the like to generate electric power. The battery 4 stores electric power generated by the electric power generator 3. The battery 4 is a power supply for the electrical components included in the agricultural machine 1. In the present example, the battery 4 is a lead-acid battery; however, the battery 4 may alternatively be configured as another type of secondary battery capable of discharging and charging. Furthermore, the agricultural machine 1 may include a discharge-charge controller configured to control discharging and charging of the battery 4.

The key switch 5 is operated by the user to an ON state to cause the agricultural machine 1 to operate and is operated by the user to an OFF state to stop the agricultural machine 1. While the key switch 5 is in the ON state, the agricultural machine 1 and the prime mover 2 operate, and the electric power generator 3 also operates (generates electric power). While the key switch 5 is in the OFF state, the agricultural machine 1, the prime mover 2, and the electric power generator 3 are in a non-operating state (stopped state). The key switch 5 is also operable by the user to a start position to start the prime mover 2.

The battery 4 includes a positive terminal (positive electrode) connected to an electric wire L1. The key switch 5 is supplied with electric power from the battery 4 through the electric wire L1 and a branch wire L1a branching from the electric wire L1. Although the battery 4 and the key switch 5 are connected by the electric wires L1 and L1a for simplification in FIG. 2, the battery 4 and the key switch 5 may be connected through an ECU, a power supply circuit, and the like.

The key switch 5 includes an output terminal connected to an electric wire L2. The electric wire L2 branches into a plurality of wires. Of the plurality of wires, a branch wire L2a is connected to the electrical component 8, a branch wire L2b is connected to a key port (second key port) 6q of the communication controller 6, and a branch wire L2c is connected to a key port (first key port) 7q of the information processor 7.

An electrical signal based on an operated state of the key switch 5 is output from the key switch 5 to the electric wire L2. More specifically, while the key switch 5 is in the OFF state, a key-OFF signal is output from the key switch 5 to the electric wire L2. In addition, when the key switch 5 is operated to the ON position (ON state), a key-ON signal is output from the key switch 5 to the electric wire L2. Furthermore, when the key switch 5 is operated to the start position, a start signal is output from the key switch 5 to the electric wire L2. The key-OFF signal, the key-ON signal, and the start signal are at different voltage levels.

The at least one electrical component 8 includes various ECUs, instruments, sensors, lighting devices, electric actuators, and solenoid valves mounted in or on the agricultural machine 1. The electric actuators include a starter motor to activate the prime mover 2. Each of the electrical components 8 is supplied with electric power from the battery 4 through the electric wire L1 and a branch wire L1d branching from the electric wire L1. In other words, the electrical component 8 is actuated by electric power stored in the battery 4.

Although the battery 4 and the electrical component 8 are connected by the electric wires L1 and L1d for simplification in FIG. 2, the battery 4 and the electrical component 8 may be connected through an ECU, a power supply circuit, and the like. The communication controller 6 and the information processor 7 may also be connected to the battery 4 through an ECU, a power supply circuit, and the like. Electric power stored in the battery 4 may be supplied to the communication controller 6 via the information processor 7.

The electrical components 8 include an electronic device that is actuated when the key switch 5 is switched to the ON state and an electronic device that is actuated even while the key switch 5 is in the OFF state. The starter motor included in the electrical components 8 is activated when the key switch 5 is operated to the start position, thus causing the prime mover 2 to operate.

The communication controller 6 is supplied with electric power from the battery 4 through the electric wire L1 and a branch wire L1b branching from the electric wire L1. More specifically, electric power from the battery 4 is supplied to a power supply port (second power supply port) 6p of the communication controller 6 through the electric wires L1 and L1b, thus actuating the communication controller 6.

The communication controller 6 communicates wirelessly with the management server 20 and the user terminal 30. The communication controller 6 includes a controller 6a, a storage unit (memory and/or storage) 6b, a voltage converter 6c, a communication interface 6d, and an auxiliary battery 6e. The controller 6a includes a processor, such as a central processing unit (CPU), and controls the components of the communication controller 6. The storage unit 6b includes a volatile memory and a nonvolatile memory and stores data, such as data for the controller 6a to control the components and communication data, such that the data is readable and writable.

The voltage converter 6c is, for example, a DC-DC converter and steps down the voltage applied from the battery 4 to the power supply port 6p. The communication interface 6d includes a communication circuit for communication with each of the management server 20 and the user terminal 30 via a mobile communication system and a communication circuit for communication with each of the management server 20 and the user terminal 30 via a short-range wireless communication system.

The controller 6a causes the voltage converter 6c to step down the voltage from the battery 4 according to each communication circuit included in the communication interface 6d and each communication system, and applies the voltage to the communication interface 6d to actuate the communication interface 6d. The controller 6a then causes the communication interface 6d to transmit wireless signals to the management server 20 and the user terminal 30 and causes the communication interface 6d to receive wireless signals transmitted from the management server 20 and the user terminal 30.

The auxiliary battery 6e is contained in the communication controller 6. The auxiliary battery 6e has a capacity smaller than that of the battery 4. The components of the communication controller 6 are also actuated by electric power supplied from the auxiliary battery 6e.

The auxiliary battery 6e may be charged by electric power input through the power supply port 6p. In other words, the auxiliary battery 6e may be a secondary battery. Furthermore, an auxiliary battery that is separate from the communication controller 6 may be provided to supply electric power to the communication controller 6. Furthermore, the auxiliary battery may be configured to supply electric power to the information processor 7.

The information processor 7 is supplied with electric power from the battery 4 through the electric wire L1 and a branch wire L1c branching from the electric wire L1. More specifically, electric power from the battery 4 is supplied to a power supply port (first power supply port) 7p of the information processor 7 through the electric wires L1 and L1c, thus actuating the information processor 7.

The information processor 7 includes a controller (processor), such as a CPU, and a memory, which are not illustrated. The information processor 7 may also include an auxiliary battery. The information processor 7 collects actuation information from each electrical component 8, operation information on the agricultural machine 1, and the like, and transmits the collected information to the management server 20 or the user terminal 30 through the communication controller 6.

The communication controller 6 causes the communication interface 6d to transmit information input from the information processor 7 to at least one of the management server 20 or the user terminal 30. At this time, the communication controller 6 includes, in the information to be transmitted, identification information for the communication controller 6 as a transmission source and identification information for the agricultural machine 1. In addition, the communication controller 6 includes, in the information to be transmitted, time information indicating the date and time at which the information was generated, the date and time of transmission, and the like.

Furthermore, the communication controller 6 receives a wireless signal transmitted to the agricultural machine 1 from at least one of the management server 20 or the user terminal 30 and outputs information included in the wireless signal to the information processor 7. The information processor 7 transmits the information output from the communication controller 6 to, for example, the electrical component 8, and controls the electrical component 8 based on the information.

When the key switch 5 is switched to the ON state, the key switch 5 outputs a key-ON signal to the electric wire L2. The key-ON signal is input to the key port 6q through the electric wires L2 and L2b. Upon receiving the key-ON signal, the controller 6a of the communication controller 6 detects (determines) that the key switch 5 has been switched to the ON state.

Furthermore, when the key switch 5 is switched to the OFF state, the key switch 5 outputs a key-OFF signal to the electric wire L2. The key-OFF signal is input to the key port 6q through the electric wires L2 and L2b. Upon receiving the key-OFF signal, the controller 6a detects that the key switch 5 has been switched to the OFF state.

Furthermore, the controller 6a is configured or programmed to transmit, to the management server 20 through the communication interface 6d, key-ON data indicating that the key switch 5 is in the ON state and key-OFF data indicating that the key switch 5 is in the OFF state.

Furthermore, when the key switch 5 is switched to the ON state, the key-ON signal output from the key switch 5 to the electric wire L2 is input to the key port 7q of the information processor 7 through the electric wire L2c. Upon receiving the key-ON signal input to the key port 7q, the information processor 7 detects that the key switch 5 has been switched to the ON state.

Furthermore, when the key switch 5 is switched to the OFF state, the key-OFF signal output from the key switch 5 to the electric wire L2 is input to the key port 7q of the information processor 7 through the electric wire L2c. Upon receiving the key-OFF signal input to the key port 7q, the information processor 7 detects that the key switch 5 has been switched to the OFF state.

Furthermore, the information processor 7 is configured or programmed to transmit key-ON-detection information indicating that the key switch 5 is in the ON state and key-OFF-detection information indicating that the key switch 5 is in the OFF state to the communication controller 6 through an electric wire (signal line) L4.

Upon receiving the key-ON-detection information from the information processor 7, the communication controller 6 transmits key-ON data to the management server 20. In addition, upon receiving the key-OFF-detection information from the information processor 7, the communication controller 6 transmits key-OFF data to the management server 20.

As described above, the communication controller 6 is configured or programmed to transmit key-ON data when the communication controller 6 receives a key-ON signal output by the key switch 5 in response to the key switch 5 being switched to the ON state and when the communication controller 6 receives key-ON-detection information from the information processor 7. In addition, the communication controller 6 is configured or programmed to transmit key-OFF data when the communication controller 6 receives a key-OFF signal and when the communication controller 6 receives key-OFF-detection information from the information processor 7. If any of the electric wires L2a, L2b, and L4 fails due to, for example, disconnection, even when the key switch 5 is switched to the ON state, the communication controller 6 receives either a key-ON signal or key-ON-detection information, and even when the key switch 5 is switched to the OFF state, the communication controller 6 receives either a key-OFF signal or key-OFF-detection information.

Furthermore, the communication controller 6 includes, in each of the key-ON data and the key-OFF data, the identification information for the communication controller 6 and the identification information for the agricultural machine 1. In addition, the communication controller 6 includes, in the key-ON data, time information indicating the date and time at which the communication controller 6 detected the ON state of the key switch 5 and includes, in the key-OFF data, time information indicating the date and time at which the communication controller 6 detected the OFF state of the key switch 5.

While the agricultural machine 1 is not used by the user for an extended period of time, if the electric wire L1 is connected to the positive terminal (+) of the battery 4 and an electric wire (ground wire) L3 is connected to the negative terminal (-) thereof as illustrated in FIG. 2, the battery 4 may be discharged by loads (e.g., the communication controller 6 and the information processor 7) and undergo self-discharge, which may result in battery depletion (overdischarge of the battery 4). As a countermeasure, it is recommended that, while the agricultural machine 1 is not used for an extended period of time, the battery 4 be electrically disconnected from the electrical components of the agricultural machine 1 by, for example, removing the electric wire L3 from the negative terminal of the battery 4.

In the agricultural machine 1 of a specific type, a battery cut-off switch configured to interrupt the flow of current from the battery 4 is provided in or on each of the electric wires L1 and L3. When the user operates the battery cut-off switch to the OFF state, the battery 4 is electrically disconnected from the electrical components without removing the electric wire L3 from the negative terminal of the battery 4.

The communication controller 6 detects, based on the state of electric power supply from the battery 4 to the power supply port 6p, whether the battery 4 is in a connected state in which the battery 4 is electrically connected to the electrical components or in a disconnected state in which the battery 4 is electrically disconnected from the electrical components. An electrically connected state refers to a state in which current can flow, and an electrically disconnected state refers to a state in which current cannot flow.

For example, when the electric wire L1 is connected to the positive terminal (+) of the battery 4 and the electric wire L3 is connected to the negative terminal (-) thereof as illustrated in FIG. 2, electric power is supplied from the battery 4 to the electric wire L1. Therefore, the communication controller 6 (controller 6a) detects (determines) that the battery 4 is in the connected state when electric power at a predetermined electrical level (e.g., a voltage at or above a threshold) is supplied from the electric wire L1 to the power supply port 6p.

Furthermore, when the battery 4 is electrically disconnected from the electrical components of the agricultural machine 1 by, for example, removing the electric wire L3 from the negative terminal (-) of the battery 4, electric power is not supplied from the battery 4 to the electric wire L1. Therefore, the communication controller 6 (controller 6a) detects (determines) that the battery 4 is in the disconnected state when electric power at the predetermined electrical level is not supplied from the electric wires L1 and L1a to the power supply port 6p.

Then, the communication controller 6 transmits, to the management server 20, battery connection data indicating that the battery 4 is in the connected state and battery disconnection data indicating that the battery 4 is in the disconnected state.

Similarly, the information processor 7 detects that the battery 4 is in the connected state when electric power at the predetermined electrical level is supplied from the electric wires L1 and L1c to the power supply port 7p, and detects that the battery 4 is in the disconnected state when electric power at the predetermined electrical level is not supplied to the power supply port 7p. Then, the information processor 7 transmits battery detection information indicating the result of the detection to the communication controller 6 each time the information processor 7 detects the connected state or the disconnected state of the battery 4.

More specifically, the information processor 7 transmits, as the battery detection information, connection-detection information indicating that the battery 4 is in the connected state to the communication controller 6 when the information processor 7 detects the connected state of the battery 4. Furthermore, the information processor 7 transmits, as the battery detection information, disconnection-detection information indicating that the battery 4 is in the disconnected state to the communication controller 6 when the information processor 7 detects the disconnected state of the battery 4.

Upon receiving battery detection information from the information processor 7, the communication controller 6 detects whether the battery 4 is in the connected state or in the disconnected state from the battery detection information. Then, the communication controller 6 transmits, based on the result of the detection, either battery connection data or battery disconnection data to the management server 20.

More specifically, when the received battery detection information is connection-detection information, the communication controller 6 detects that the battery 4 is in the connected state and transmits battery connection data. Furthermore, when the received battery detection information is disconnection-detection information, the communication controller 6 detects that the battery 4 is in the disconnected state and transmits battery disconnection data.

As described above, the communication controller 6 detects whether the battery 4 is in the connected state or in the disconnected state from each of the state of electric power supply from the battery 4 and the battery detection information received from the information processor 7, and transmits battery connection data or battery disconnection data based on the result of the detection. When any of the electric wires L1b, L1c, and L4 fails due to, for example, disconnection, the communication controller 6 detects whether the battery 4 is in the connected state or in the disconnected state from either the state of electric power supply from the battery 4 or the battery detection information received from the information processor 7, and transmits either the battery connection data or the battery disconnection data based on the result of the detection.

Furthermore, the communication controller 6 includes, in each of the battery connection data and the battery disconnection data, the identification information for the agricultural machine 1 and the identification information for the communication controller 6. In addition, the communication controller 6 includes, in the battery connection data, time information indicating the date and time at which the communication controller 6 detected the connected state of the battery 4 and includes, in the battery disconnection data, time information indicating the date and time at which the communication controller 6 detected the disconnected state of the battery 4.

FIG. 3 is a diagram illustrating essential components of the management server 20. The management server 20 includes a controller 21, a storage (memory and/or storage) 22, and the communication device 43. The controller 21 includes a processor such as a CPU, a volatile memory, and a nonvolatile memory. The storage 22 includes a nonvolatile memory and a hard disk drive. The storage 22 stores software programs to be executed by the controller 21 and various types of control data.

The storage 22 includes a database. The database stores data on the agricultural machine 1, data on agricultural work to be performed using the agricultural machine 1, data on agricultural fields, data on the user, and the like. The communication device 23 is a communication interface configured to perform wired or wireless communication via a mobile communication network 51, a fixed telephone network 52, and the Internet 50. The management server 20 (controller 21) communicates with the communication controller 6 of the agricultural machine 1 and the communication device 33 of the user terminal 30 through the communication device 23.

FIG. 4 is a diagram illustrating essential components of the user terminal 30. The user terminal 30 includes a controller 31, a memory 32, the communication device 33, and a user interface 34. The controller 31 includes a processor such as a CPU, a volatile memory, and a nonvolatile memory. The memory 32 is a nonvolatile memory. The memory 32 stores software programs to be executed by the controller 31 and various types of control data.

The communication device 33 is a communication interface configured to perform wireless communication via the mobile communication network 51 and the Internet 50. The user terminal 30 (controller 31) communicates with the communication controller 6 of the agricultural machine 1 and the communication device 23 of the management server 20 through the communication device 33.

The user interface 34 includes a touch panel with a display, an operation switch, a loudspeaker, and a microphone. The user terminal 30 (controller 31) outputs information to the user and receives information from the user through the user interface 34. The user interface 34 serves as an output interface and an input interface. In another example, the output interface and the input interface may be provided separately from each other.

As described above, when key-ON data transmitted from the communication controller 6 of the agricultural machine 1 is received by the communication device 23 of the management server 20, the controller 21 determines from the key-ON data that the key switch 5 of the agricultural machine 1 has been switched to the ON state and that the agricultural machine 1, the prime mover 2, and the electric power generator 3 are in an operating state.

When key-OFF data transmitted from the communication controller 6 of the agricultural machine 1 is received by the communication device 23 of the management server 20, the controller 21 determines from the key-OFF data that the key switch 5 of the agricultural machine 1 has been switched to the OFF state and that the agricultural machine 1, the prime mover 2, and the electric power generator 3 are in the non-operating state. While the agricultural machine 1, the prime mover 2, and the electric power generator 3 are in the non-operating state, the battery 4 remains uncharged, undergoes self-discharge, and is discharged to actuate the electrical components such as the communication controller 6.

When battery connection data transmitted from the communication controller 6 of the agricultural machine 1 is received by the communication device 23 of the management server 20, the controller 21 determines from the battery connection data that the battery 4 of the agricultural machine 1 is electrically connected to the electrical components. Furthermore, when battery disconnection data transmitted from the communication controller 6 is received by the communication device 23, the controller 21 determines from the battery disconnection data that the battery 4 of the agricultural machine 1 is electrically disconnected from the electrical components.

To prevent battery depletion (overdischarge of the battery 4) in the agricultural machine 1, the controller 21 determines, based on data (key-ON data, key-OFF data, battery connection data, or battery disconnection data) from the communication controller 6, whether or not a predetermined first time period has elapsed while the agricultural machine 1, the prime mover 2, the electric power generator 3, and the like are in the non-operating state, that is, with the key switch 5 in the OFF state.

The first time period is set to, for example, one to two weeks, but is not limited thereto. The first time period is set as appropriate in consideration of the capacity of the battery 4, the specifications of the agricultural machine 1, and the like. The controller 21 measures an elapsed time period by using, for example, a predetermined storage area of the memory included therein as a counter (timer). Alternatively, the controller 21 measures an elapsed time period based on time information included in the data (key-ON data, key-OFF data, battery connection data, or battery disconnection data) received from the communication controller 6 of the agricultural machine 1.

For example, when the first time period has elapsed since the management server 20 received key-OFF data without the management server 20 receiving key-ON data, that is, when the first time period has elapsed with the agricultural machine 1 and/or the like in the non-operating state, the controller 21 causes the communication device 23 to transmit, to the user terminal 30, alert information to prompt the user to electrically disconnect the electrical components of the agricultural machine 1 and the battery 4. In the user terminal 30, when the alert information transmitted from the management server 20 is received by the communication device 33, the controller 31 causes the user interface 34 to output the alert information to the user.

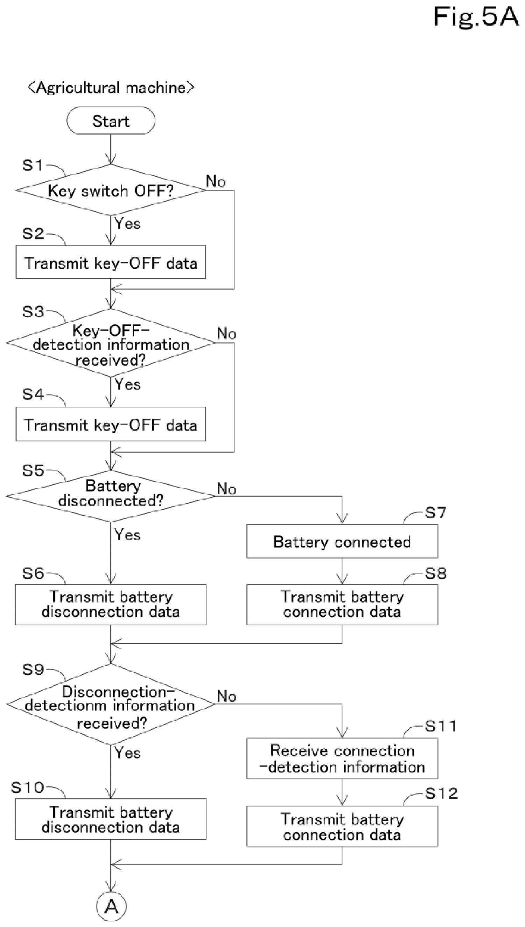

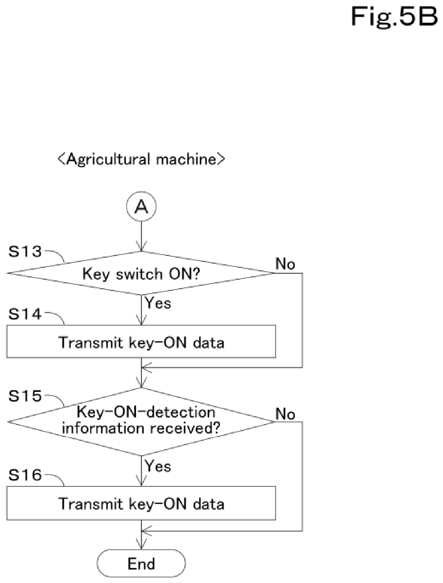

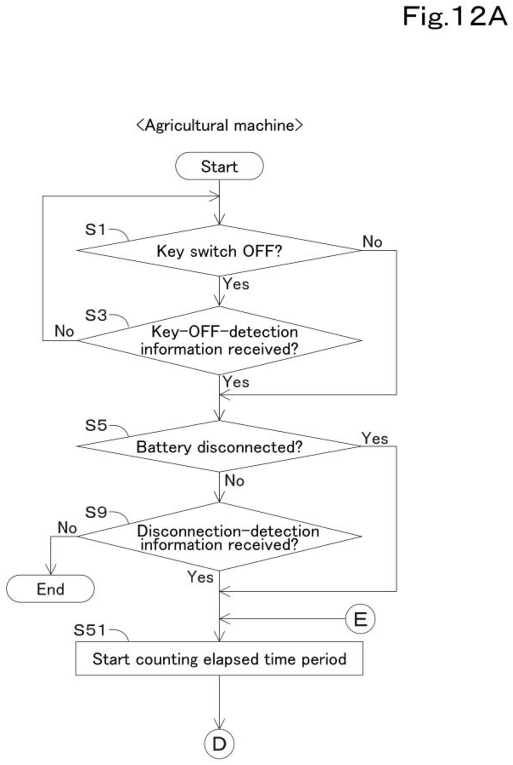

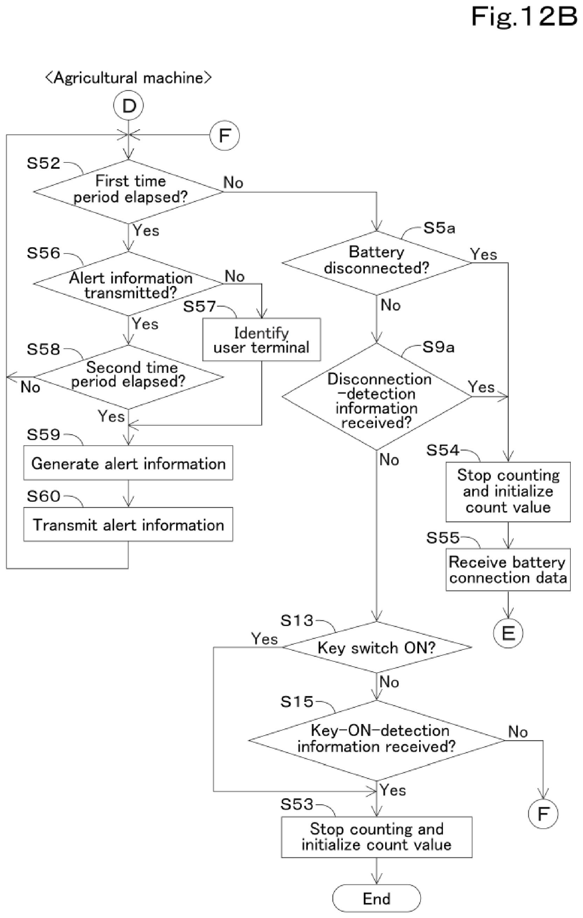

FIGS. 5A and 5B illustrate a flowchart illustrating an example detection operation performed by the communication controller 6 of the agricultural machine 1 in a first example embodiment. More specifically, steps in FIGS. 5A and 5B are executed by the controller 6a of the communication controller 6 at predetermined intervals in accordance with a software program stored in the storage unit 6b. The same applies to steps in a flowchart illustrated in FIGS. 12A and 12B, which will be described later.

While the agricultural machine 1 is operating (with the prime mover 2 also operating and the electric power generator 3 in an operable state), the user switches the key switch 5 from the ON state to the OFF state. Thus, the agricultural machine 1, the prime mover 2, and the electric power generator 3 are stopped and enter the non-operating state. When a key-OFF signal from the key switch 5 is input to the key port 6q, the controller 6a of the communication controller 6 detects that the key switch 5 has been switched to the OFF state (S1 in FIG. 5A: YES) and causes the communication interface 6d to transmit key-OFF data to the management server 20 (S2).

The information processor 7 detects that the key switch 5 has been switched to the OFF state and transmits key-OFF-detection information to the communication controller 6. When the key-OFF-detection information is received (S3: YES), the controller 6a causes the communication interface 6d to transmit key-OFF data to the management server 20 (S4).

Then, the controller 6a detects whether or not the battery 4 is in the electrically disconnected state. For example, the user electrically disconnects the battery 4 from the electrical components (e.g., the electrical component 8, the communication controller 6, and the information processor 7) of the agricultural machine 1 by, for example, removing the electric wire L3 from the negative terminal (-) of the battery 4. In this case, the controller 6a is actuated by electric power supplied from the auxiliary battery 6e, determines that electric power is not supplied from the battery 4 to the power supply port 6p, and detects that the battery 4 is in the disconnected state (S5: YES). Then, the controller 6a causes the communication interface 6d to transmit battery disconnection data to the management server 20 (S6).

The information processor 7 detects that the battery 4 is in the disconnected state and transmits disconnection-detection information (battery detection information) indicating the result of the detection to the communication controller 6. When the disconnection-detection information is received (S9: YES), the controller 6a causes the communication interface 6d to transmit battery disconnection data to the management server 20 (S10).

On the other hand, as illustrated in FIG. 2, while the battery 4 is in the electrically connected state such that the electric wire L1 is connected to the positive terminal (+) of the battery 4 and the electric wire L3 is connected to the negative terminal (-) thereof, the controller 6a is actuated by electric power supplied from the battery 4. Then, the controller 6a detects that the battery 4 is in the electrically connected state (S7) and causes the communication interface 6d to transmit battery connection data to the management server 20 (S8).

The information processor 7 detects that the battery 4 is in the connected state and transmits connection-detection information (battery detection information) indicating the result of the detection to the communication controller 6. When the controller 6a receives the connection-detection information (S11), the controller 6a causes the communication interface 6d to transmit battery connection data to the management server 20 (S12).

Furthermore, while the battery 4 is electrically connected to the electrical components 6 to 8, the user switches the key switch 5 from the OFF state to the ON state to use the agricultural machine 1. Thus, the agricultural machine 1, the prime mover 2, and the electric power generator 3 are activated into the operating state. When a key-ON signal from the key switch 5 is input to the key port 6q, the controller 6a detects that the key switch 5 has been switched to the ON state (S13: YES) and causes the communication interface 6d to transmit key-ON data to the management server 20 (S14).

The information processor 7 detects that the key switch 5 has been switched to the ON state and transmits key-ON-detection information to the communication controller 6. When the key-ON-detection information is received (S15: YES), the controller 6a causes the communication interface 6d to transmit key-ON data to the management server 20 (S16).

On the other hand, while the agricultural machine 1 is not used by the user, the key switch 5 remains in the OFF state. In this case, the controller 6a does not detect switching of the key switch 5 from the OFF state to the ON state (S13: NO). Furthermore, the information processor 7 also does not detect switching of the key switch 5 from the OFF state to the ON state and thus does not transmit key-ON-detection information to the communication controller 6. Therefore, the controller 6a does not receive key-ON-detection information (S15: NO). In addition, key-ON data is not transmitted from the communication controller 6 to the management server 20.

When each of the key-OFF data, the key-ON data, the battery connection data, and the battery disconnection data transmitted from the agricultural machine 1 (communication controller 6) is received by the communication device 23 of the management server 20 as described above, the controller 21 stores the data in the database or the like of the storage 22. In addition, when key-OFF data is received by the communication device 23, the controller 21 performs a monitoring operation to monitor the states of the key switch 5 and the battery 4 of the agricultural machine 1 associated with the key-OFF data.

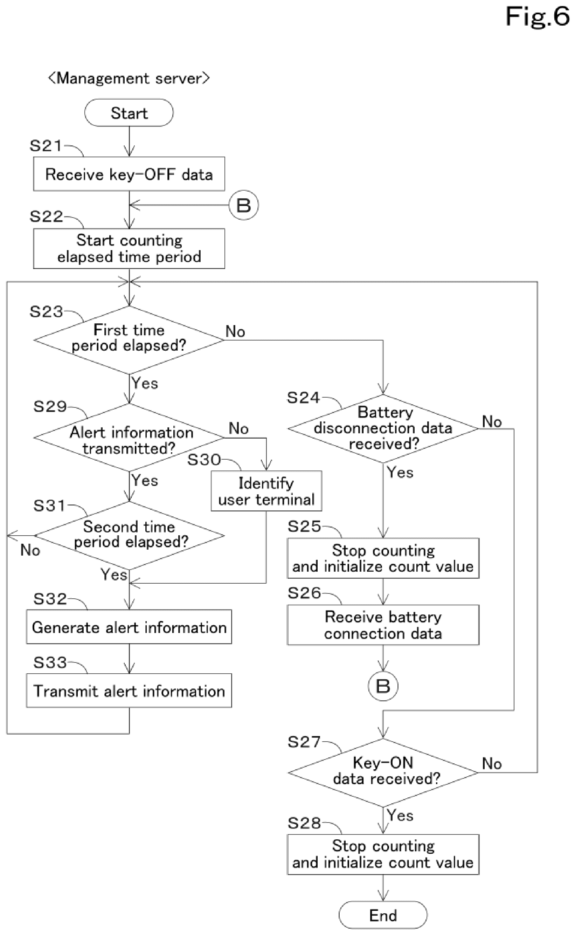

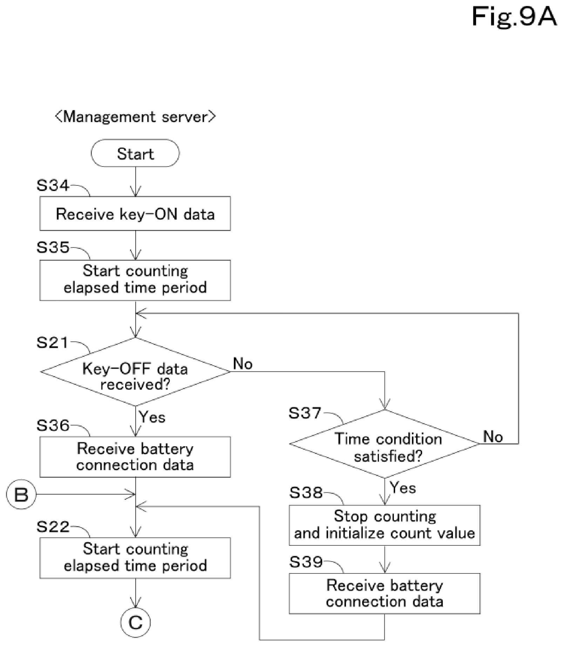

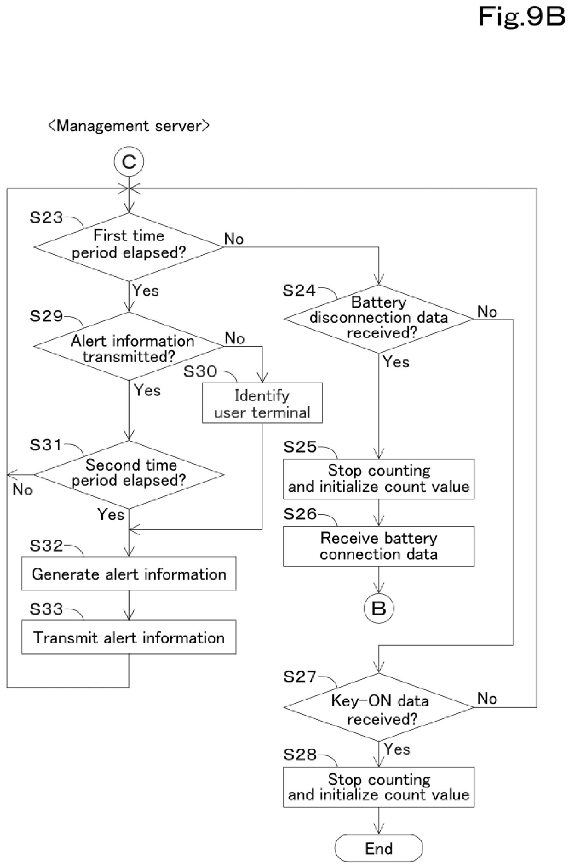

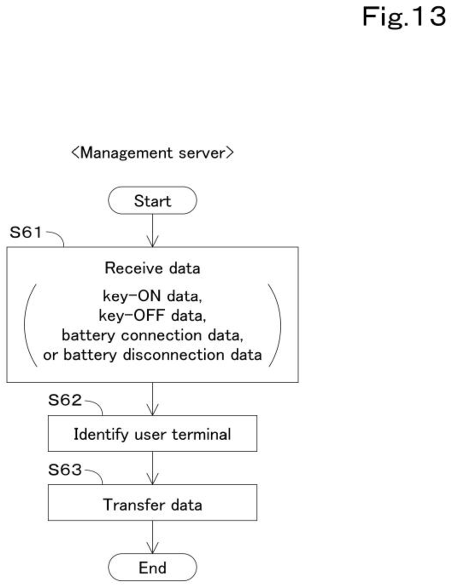

FIG. 6 is a flowchart illustrating an example monitoring operation of the management server 20 in the first example embodiment. Steps in FIG. 6 are executed by the controller 21 at predetermined intervals in accordance with a software program stored in the storage 22. The same applies to steps of flowcharts illustrated in FIGS. 9A, 9B, and 13, which will be described later.

When the communication device 23 receives key-OFF data transmitted from the communication controller 6 (S21 in FIG. 6), the controller 21 of the management server 20 determines that the key switch 5 of the agricultural machine 1 has been switched to the OFF state and that the agricultural machine 1, the prime mover 2, the electric power generator 3, and the like are in the non-operating state, and starts counting (measuring) an elapsed time period (S22). When key-OFF data is again received by the communication device 23 while the elapsed time period is being counted, the controller 21 does not accept the key-OFF data and continues counting the elapsed time period.

The controller 21 determines whether or not the first time period has elapsed while the key switch 5 is in the OFF state and the agricultural machine 1, the prime mover 2, and the electric power generator 3 are in the non-operating state. When battery disconnection data is received by the communication device 23 (S24: YES) before the first time period elapses (S23: NO), the controller 21 determines that the battery 4 is electrically disconnected from the electrical components 6 to 8. Then, the controller 21 stops counting the elapsed time period and initializes (clears) the count value (counted time information) (S25).

After that, when the communication device 23 receives battery connection data (S26), the controller 21 determines that the battery 4 is electrically connected to the electrical components 6 to 8. Then, the controller 21 moves to step S22, starts counting an elapsed time period again, and repeatedly executes the subsequent steps.

When key-ON data is received by the communication device 23 (S27: YES) before the first time period elapses (S23: NO), the controller 21 stops counting the elapsed time period and initializes the count value (S28). After that, the controller 21 repeatedly executes step S21 and the subsequent steps.

When the count value of the elapsed time period exceeds the first time period while the controller 21 is not receiving battery disconnection data (S24: NO) or key-ON data (S27: NO), the controller 21 determines that the first time period has elapsed (S23: YES). In other words, the first time period elapses while the battery 4 is in the connected state, the key switch 5 is in the OFF state, and the agricultural machine 1 and the like are in the non-operating state.

Then, if alert information has not been transmitted since the controller 21 started counting the elapsed time period (S29: NO), the controller 21 identifies the user terminal (transmission destination of alert information) 30 used by the user of the agricultural machine 1 (S30). At this time, the controller 21 reads the identification information for the agricultural machine 1 included in the key-OFF data received in step S21 and retrieves user information associated with the identification information from the database of the storage 22 to identify the user terminal 30 indicated by the user information.

Then, the controller 21 generates alert information to prompt the user to electrically disconnect the electrical components of the agricultural machine 1 and the battery 4 (S32) and causes the communication device 23 to transmit the alert information to the identified user terminal 30 (S33). At this time, the controller 21 transmits an email including the alert information to the user terminal 30. Furthermore, the controller 21 includes, in the alert information, the identification information for the agricultural machine 1 and time information (time information indicating the date and time at which the ON state of the key switch 5 was detected) included in the key-OFF data and time information indicating the date and time at which the controller 21 determined that the first time period had elapsed. After transmitting the alert information, the controller 21 repeats step S23 and the subsequent steps.

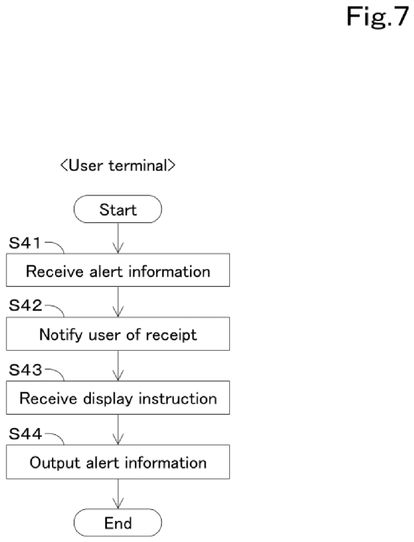

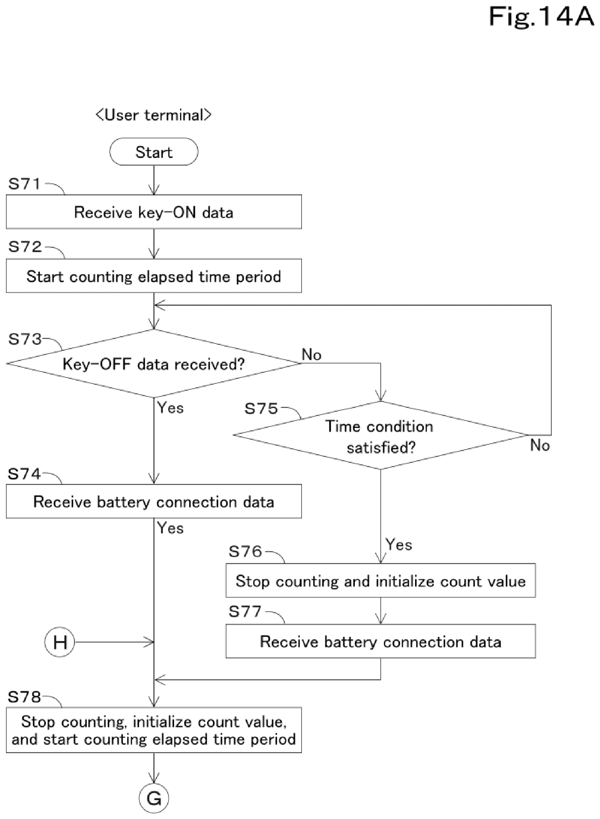

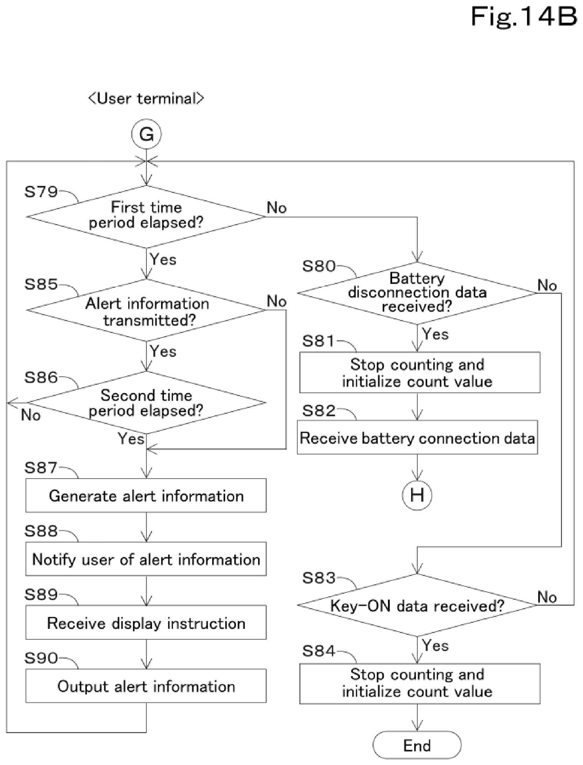

FIG. 7 is a flowchart illustrating an example alert operation of the user terminal 30 in the first example embodiment. Steps in FIG. 7 are executed by the controller 31 at predetermined intervals in accordance with a software program stored in the memory 32. The same applies to steps in a flowchart of FIGS. 14A and 14B, which will be described later.

When the communication device 33 receives alert information transmitted from the management server 20 (S41), the controller 31 of the user terminal 30 causes the user interface 34 to notify the user that the alert information has been received (S42). At this time, the controller 31 causes the user interface 34 to, for example, display or output by voice a message indicating that an email including the alert information has been received or to output a predetermined notification sound or melody.

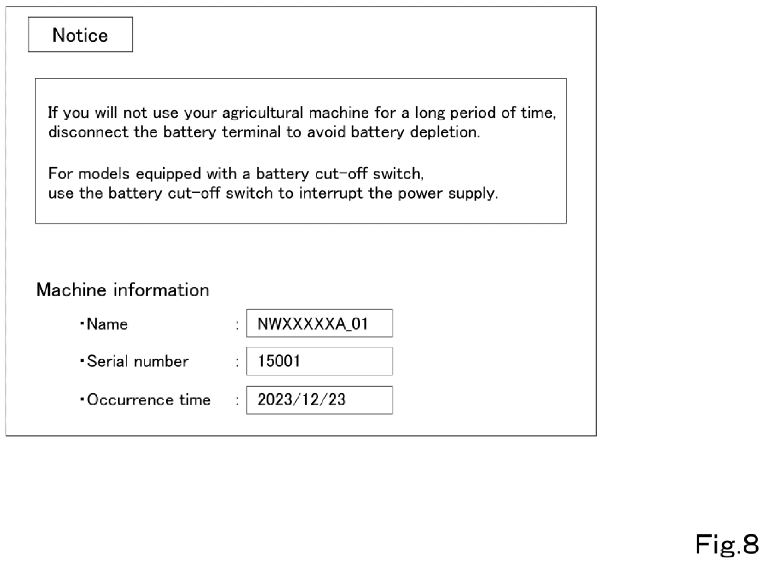

Then, when an instruction to display the alert information is entered by the user through the user interface 34 (S43), the controller 31 causes the user interface 34 to output the alert information to the user (S44). At this time, for example, as illustrated in FIG. 8, the controller 31 displays the alert information on a display screen of the user interface 34.

FIG. 8 is a diagram illustrating an example of displayed alert information in the first example embodiment. As illustrated in FIG. 8, the alert information displayed, through the user interface 34, to prompt the user to electrically disconnect the electrical components of the agricultural machine 1 and the battery 4 includes a message proposing that, when the user will not use the agricultural machine 1 for an extended period of time, the terminal of the battery 4 be disconnected in order to inhibit battery depletion, and a message proposing that, when the agricultural machine 1 is equipped with a battery cut-off switch, the power supply be interrupted by using the battery cut-off switch. Furthermore, the displayed alert information includes machine information, such as the name and serial number of the agricultural machine 1.

The displayed alert information also includes a message asking the user to disregard the alert information so that the user is not annoyed by the alert information when the user has already disconnected the terminal of the battery 4. In another example, the controller 21 may cause the user interface 34 to output the alert information by voice.

After checking the alert information output as described above, the user is highly likely to perform an operation of electrically disconnecting the battery 4 of the corresponding agricultural machine 1 from the electrical components. However, even after checking the alert information, the user may, for some reason, leave the battery 4 electrically connected to the electrical components and keep the key switch 5 in the OFF state.

In that case, neither battery disconnection data nor key-ON data is transmitted from the communication controller 6 of the agricultural machine 1. Therefore, the communication device 23 of the management server 20 receives neither battery disconnection data (S24 in FIG. 6: NO) nor key-ON data (S27: NO).

Since the first time period has already elapsed (S23: YES) and the alert information has been transmitted (S29: YES), the controller 21 checks the count value of the elapsed time period and determines whether or not a predetermined second time period has elapsed since the previous alert information was transmitted. The second time period is set to, for example, two weeks, but is not limited thereto. Like the first time period, the second time period may be set as appropriate in consideration of the capacity of the battery 4, the specifications of the agricultural machine 1, and the like. In addition, the second time period may be equal to the first time period or may be set shorter than or longer than the first time period.

The controller 21 determines that the second time period has elapsed (S31: YES) without battery disconnection data (S24: NO) or key-ON data (S27: NO) being received, for example. In this case, the controller 21 generates alert information again (S32) and causes the communication device 23 to transmit the alert information to the user terminal 30 (S33). At this time, the controller 21 may transmit, to the user terminal 30, the same alert information as that transmitted previously, without newly generating alert information.

After that, the controller 21 repeats step S23 and the subsequent steps. In other words, the controller 21 transmits alert information to the user terminal 30 upon each elapse of the second time period while the battery 4 is in the connected state and the key switch 5 is in the OFF state.

When the communication device 33 receives alert information again (S41 in FIG. 7), the controller 31 of the user terminal 30 executes steps S42 and S43 as described above and then causes the user interface 34 to again output the alert information (S44).

In the above-described first example embodiment, when the controller 21 of the management server 20 receives key-OFF data (S21 in FIG. 6), the controller 21 starts counting an elapsed time period (S22), irrespective of either the connected state or the disconnected state of the battery 4. However, for example, as in a second example embodiment illustrated in FIGS. 9A and 9B, the controller 21 may start counting an elapsed time period (S22) after receiving key-OFF data (S21) and then receiving battery connection data (S36).

FIGS. 9A and 9B illustrate a flowchart illustrating an example monitoring operation of the management server 20 in the second example embodiment. In FIGS. 9A and 9B, the same steps as those in the first example embodiment illustrated in FIGS. 5A and 5B are assigned the same reference signs. The same applies to other flowcharts, which will be described later. In addition, the operations of the communication controller 6 and the user terminal 30 in the second example embodiment are the same as those in the above-described first example embodiment.

The controller 21 receives key-OFF data from the communication controller 6 of the agricultural machine 1 (S21 in FIG. 9A) and receives battery connection data (S36), and then starts counting an elapsed time period (S22). After that, the controller 21 determines that the first time period has elapsed (S23: YES). In this case, if the management server 20 does not receive battery connection data or key-ON data (S24: NO, S27: NO), the controller 21 executes steps S29 and S30 as described above and then transmits alert information to the user terminal 30 (S31). Furthermore, the user terminal 30 causes the user interface 34 to output the alert information (S41 to S44 in FIG. 7).

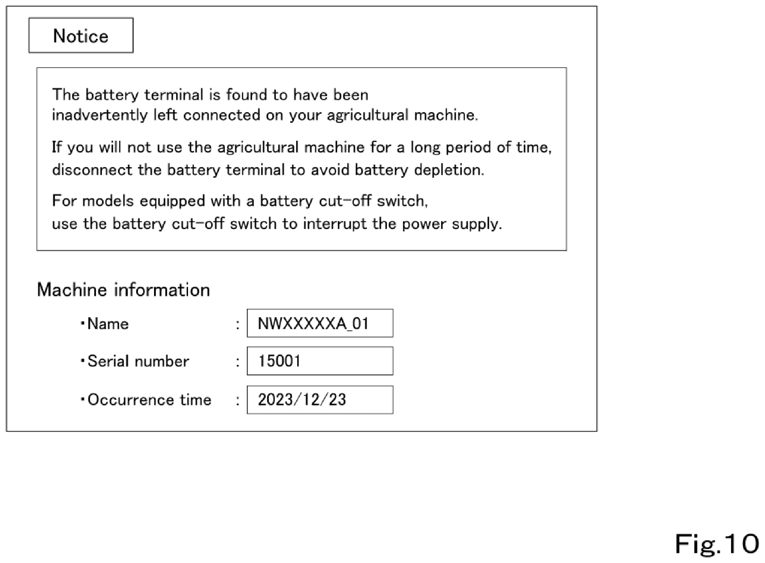

In the second example embodiment, however, since the controller 21 receives key-OFF data and battery connection data (S21, S36) and determines that the key switch 5 is in the OFF state and the battery 4 is in the connected state, for example, as illustrated in FIG. 10, the alert information may include a message indicating that the user has forgotten to disconnect the terminal of the battery 4.

FIG. 10 is a diagram illustrating an example of displayed first alert information. The first alert information refers to alert information that is first generated (S32) after the controller 21 of the management server 20 determines that the first time period has elapsed (S23 in FIG. 9A: YES) and executes steps S27 and S28. The first alert information is transmitted by the controller 21 from the communication device 23 to the user terminal 30 (S33) and is then output (displayed) by the user interface 34 (S44 in FIG. 7).

The first alert information illustrated in FIG. 10 includes, in addition to the message included in the above-described alert information of FIG. 8, a message indicating that the user has forgotten to disconnect the battery 4 of the agricultural machine 1 and the date and time at which the first time period elapsed after the key switch 5 of the agricultural machine 1 was switched to the OFF state (date and time of occurrence).

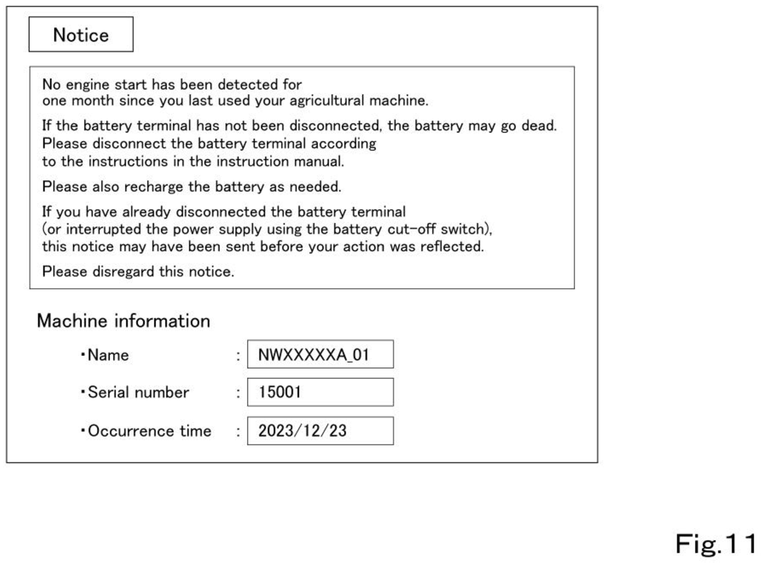

To issue an alert again after the first alert information is output, for example, as illustrated in FIG. 11, second or subsequent alert information (second alert information) may be output (displayed) by the user interface 34. In other words, when the second time period has elapsed (S31: YES) without battery disconnection data (S24 in FIG. 9B: NO) or key-ON data (S27: NO) being received since the first alert information was transmitted, the controller 21 generates second or subsequent alert information different from the first alert information (S32) and causes the communication device 23 to transmit the alert information to the user terminal 30 (S33).

FIG. 11 is a diagram illustrating an example of displayed second or subsequent alert information. The second or subsequent alert information includes information different from the first alert information. Specifically, as illustrated in FIG. 11, the second or subsequent alert information includes a message indicating that operating of the prime mover 2 of the agricultural machine 1 (engine start by using the key switch 5) has not been detected for a certain period of time and a message proposing checking the battery 4 and recharging the battery 4 because battery depletion is likely to occur if the terminal of the battery 4 has not been disconnected.

For example, key-OFF data transmitted from the communication controller 6 may fail to be received by the management server 20 due to a communication failure caused, for example, by the agricultural machine 1 being at a location with poor radio conditions or by network congestion in an area where the agricultural machine 1 is located. As a countermeasure in this case, for example, as illustrated in FIG. 9A, when a predetermined time condition is satisfied, the management server 20 may estimate that the key switch 5 is in the OFF state.

More specifically, when the key switch 5 of the agricultural machine 1 is switched from the OFF state to the ON state (S13 in FIG. 5B: YES), the communication controller 6 transmits key-ON data to the management server 20 (S14). When the communication device 23 of the management server 20 receives the key-ON data (S34 in FIG. 9A), the controller 21 starts counting an elapsed time period (S35). In addition, the controller 21 determines that the key switch 5 is in the ON state and that the agricultural machine 1, the prime mover 2, and the electric power generator 3 are in the operating state.

Then, if key-OFF data is not received (S21: NO), the controller 21 determines whether or not the predetermined time condition is satisfied. As the predetermined time condition is, for example, at least one of (i) a third time period has elapsed or (ii) a limit time point is reached. The third time period is set to, for example, 12 hours, but is not limited thereto. The third time period is set to be longer than the average time period of use of the agricultural machine 1. The limit time point is set to, for example, 12:00 a.m. (midnight) of the following day, but is not limited thereto. The limit time point is set to a time point later than the average end time of use of the agricultural machine 1.

When the controller 21 detects at least one of that the count value of the elapsed time period has exceeded the third time period and the third time period has elapsed or that the current time has reached the limit time point, the controller 21 determines that the predetermined time condition is satisfied (S37: YES). In this case, the controller 21 stops counting the elapsed time period, initializes the count value (S38), and estimates that the key switch 5 of the agricultural machine 1 has been switched to the OFF state (S39).

Then, the controller 21 starts counting an elapsed time period that has elapsed since the controller 21 estimated the OFF state of the key switch 5 (S22), and determines whether or not the first time period has elapsed without battery disconnection data or key-ON data being received. After that, the controller 21 executes steps following step S23 as described above.

In the above-described first to third example embodiments, the controller 21 of the management server 20 determines whether or not the first time period has elapsed with the key switch 5 of the agricultural machine 1 in the OFF state, that is, with the agricultural machine 1 and the like in the non-operating state. The determination may be performed by the controller of the agricultural machine 1 or by the user terminal 30. In addition, as described above, the steps executed by the controller 21 may be executed by the controller of the agricultural machine 1 or by the user terminal 30.

FIGS. 12A and 12B illustrate a flowchart illustrating an example monitoring operation of the communication controller 6 of the agricultural machine 1 in a third example embodiment. Note that steps S51 to S60 illustrated in FIG. 12 correspond to steps S22, S23, S28, S25, S26, and S29 to S33 in FIGS. 9A and 9B described above. Furthermore, the operation of the user terminal 30 in the third example embodiment is the same as that in the first example embodiment illustrated in FIG. 7. Furthermore, in the third example embodiment, the communication controller 6 of the agricultural machine 1 transmits alert information directly to the user terminal 30 without transmission via the management server 20.

When the controller 6a of the communication controller 6 detects, from a key-OFF signal input through the key port 6q, that the key switch 5 has been switched to the OFF state (S1 in FIG. 12A: YES), the controller 6a detects whether or not the battery 4 is in the connected state. Furthermore, if the controller 6a does not detect that the key switch 5 has been switched to the OFF state (S1: NO) but receives key-OFF-detection information from the information processor 7 (S3: YES), the controller 6a detects from the key-OFF-detection information that the key switch 5 has been switched to the OFF state. Then, the controller 6a detects whether or not the battery 4 is in the connected state.

When the controller 6a detects from the state of electric power supply from the electric wires L1 and L1b to the power supply port 6p that the battery 4 is in the connected state (S5: YES), the controller 6a starts counting an elapsed time period (S51). Furthermore, when the controller 6a receives connection-detection information from the information processor 7 (S9: YES), the controller 6a detects from the connection-detection information that the battery 4 is in the connected state and starts counting an elapsed time period (S51). Then, the controller 6a determines (monitors) whether or not the first time period has elapsed with the key switch 5 in the OFF state and the battery 4 in the connected state.

When the controller 6a detects from the state of electric power supply to the power supply port 6p that the battery 4 is in the disconnected state (S5a in FIG. 12B: YES) before the first time period elapses (S52: NO) or when the controller 6a receives disconnection-detection information from the information processor 7 (S8: YES), the controller 6a stops counting the elapsed time period and initializes the count value (S54). After that, when the controller 6a detects that the battery 4 is in the connected state (S55), the controller 6a moves to step S51 and repeats step S51 and the subsequent steps.

The controller 6a detects that the key switch 5 has been switched to the ON state (S13: YES) or receives key-ON-detection information from the information processor 7 (S15: YES) while the controller 6a is not detecting that the battery 4 is in the disconnected state (S5a: NO) and is not receiving disconnection-detection information from the information processor 7 (S9a: NO). In this case, the controller 6a stops counting the elapsed time period and initializes the count value (S53). Then, the controller 6a repeats step S1 and the subsequent steps in FIG. 12A.

If the controller 6a does not detect that the key switch 5 has been switched to the ON state (S13: NO) and does not receive key-ON-detection information from the information processor 7 (S15: NO), the controller 6a repeats step S52 and the subsequent steps in FIG. 12A.

Thereafter, when the controller 6a determines that the first time period has elapsed (S52: YES), if alert information has not yet been transmitted (S56: NO) since the controller 6a started counting the elapsed time period, the controller 6a identifies the user terminal 30 used by the user of the agricultural machine 1 (S57). Then, the controller 6a generates alert information (S59) and causes the communication interface 6d to transmit the alert information to the user terminal 30 (S60).

When the communication device 33 receives the alert information (S41 in FIG. 7), the controller 31 of the user terminal 30 executes steps S42 and S43 as described above and then causes the user interface 34 to output (display) the alert information (S44). At this time, for example, the first alert information illustrated in FIG. 10 is output by the user interface 34.

Thereafter as well, for example, the controller 6a does not detect that the battery 4 is in the disconnected state (S5a: NO), does not receive disconnection-detection information (S9a: NO), does not detect that the key switch 5 has been switched to the ON state (S13: NO), and does not receive key-ON-detection information (S15: NO). In this case, since the first time period has already elapsed (S53: YES) and the alert information has been transmitted (S54: YES), the controller 6a determines (monitors) whether or not the second time period has elapsed.

Then, when the controller 6a determines that the second time period has elapsed (S58: YES), the controller 6a generates alert information (S59) and causes the communication interface 6d to transmit the alert information to the user terminal 30 (S60). Then, the controller 6a repeats step S52 and the subsequent steps.

When the communication device 33 receives the alert information again (S41 in FIG. 7), the controller 31 of the user terminal 30 executes steps S42 and S43 as described above and then causes the user interface 34 to output the alert information (S44). At this time, for example, the second or subsequent alert information illustrated in FIG. 11 is output by the user interface 34.

In the above-described third example embodiment, the communication controller 6 of the agricultural machine 1 transmits abnormality information directly to the user terminal 30 without transmission via the management server 20. Alternatively, the communication controller 6 may transmit abnormality information to the management server 20, and the management server 20 may transfer the abnormality information to the user terminal 30. Furthermore, in this case, the user terminal 30 used by the user of the agricultural machine 1 may be identified by the controller 21 of the management server 20 instead of by the controller 6a of the communication controller 6.

FIG. 13 is a flowchart illustrating an example transfer operation of the management server 20 in a fourth example embodiment. When the controller 21 of the management server 20 receives any of key-ON data, key-OFF data, battery connection data, and battery disconnection data transmitted from the communication controller 6 of the agricultural machine 1 (S61), the controller 21 identifies the user terminal 30 used by the user of the agricultural machine 1 based on the identification information for the agricultural machine 1 included in the received data (S62). The details of step S62 are the same as those of step S28 in FIG. 5A described above, for example. Then, the controller 21 causes the communication device 23 to transfer the received data to the identified user terminal 30 (S63).

FIGS. 14A and 14B illustrate a flowchart illustrating an example monitoring operation of the user terminal 30 in the fourth example embodiment. Note that steps S71 to S77 and S79 to S90 for the user terminal 30 illustrated in FIGS. 14A and 14B correspond to steps S34, S35, S21, S36 to S39, S22 to S29, S31, and S32 for the management server 20 in FIGS. 9A and 9B described above and steps S42 to S44 in FIG. 7. Furthermore, the operation of the communication controller 6 of the agricultural machine 1 in the fourth example embodiment is the same as that in the first example embodiment illustrated in FIGS. 5A and 5B.

In the user terminal 30 identified in step S62 in FIG. 13, when the communication device 33 receives key-ON data (S71 in FIG. 14A), the controller 31 starts counting an elapsed time period (S72). Then, when the communication device 33 receives key-OFF data (S73: YES) and then receives battery connection data (S74), the controller 31 once stops counting the elapsed time period, initializes the count value, and then starts counting the elapsed time period (S78). Then, the controller 31 determines (monitors) whether or not the first time period has elapsed while the key switch 5 is in the OFF state and the battery 4 is in the connected state.

When battery disconnection data is received (S80: YES) before the first time period elapses (S79: NO), the controller 31 stops counting the elapsed time period and initializes the count value (S81). Thereafter, when battery connection data is received (S82), the controller 31 moves to step S78 and repeats step S78 and the subsequent steps.

When key-ON data is received by the communication device 33 (S83: YES) before the first time period elapses (S79: NO), the controller 31 stops counting the elapsed time period and initializes the count value (S84). After that, the controller 21 repeatedly executes step S71 and the subsequent steps.

The controller 31 determines that the first time period has elapsed (S79: YES) without battery disconnection data being received (S80: NO) and without key-ON data being received (S83: NO) . In this case, if alert information has not yet been transmitted (S85: NO) since the controller 31 started counting the elapsed time period, the controller 31 generates alert information (S87). Then, the controller 31 causes the user interface 34 to notify the user of the alert information (S88). When an instruction to display the alert information is entered by the user through the user interface 34 (S89), the controller 31 causes the user interface 34 to output the alert information to the user (S90). At this time, the controller 31 outputs, for example, the alert information illustrated in FIG. 10.

Thereafter as well, the first time period has already elapsed (S79: YES) while battery disconnection data (S80: NO) or key-ON data (S83: NO) is not received, and the controller 31 has already transmitted alert information (S85: YES). In this case, when the controller 31 determines that the second time period has elapsed (S86: YES), the controller 31 generates alert information (S87), executes steps S88 and S89 as described above, and causes the user interface 34 to output the alert information (S90). At this time, the controller 31 outputs, for example, the alert information illustrated in FIG. 11. After that, the controller 31 repeats step S79 and the subsequent steps.

The controller 31 determines whether or not a predetermined time condition is satisfied, while key-OFF data is not received (S73: NO) after key-ON data was received (S71 in FIG. 14A) and counting of the elapsed time period was started (S72). At this time, if the controller 31 determines that the predetermined time condition is satisfied (S75: YES), the controller 31 stops counting the elapsed time period, initializes the count value (S76), and estimates that the key switch 5 of the agricultural machine 1 has been switched to the OFF state (S77). Then, the controller 31 repeats step S78 and the subsequent steps as described above.

The above-described first to fourth example embodiments illustrate an example in which, in response to the key switch 5 of the agricultural machine 1 being switched to the OFF state, at least one of the management server 20, the communication controller 6, or the user terminal 30 starts a monitoring operation or the like. Furthermore, for example, at least one of the management server 20, the communication controller 6, or the user terminal 30 may start a monitoring operation or the like in response to the user entering, through the user interface 34 of the user terminal 30, an instruction to obtain information on the agricultural machine 1.

Specifically, for example, when the user enters an instruction to obtain information on the agricultural machine 1 into the user terminal 30 through the user interface 34, the controller 31 may start, at the user terminal 30, the monitoring operation of FIGS. 14A and 14B, or the controller 31 may cause the communication device 33 to transmit a start instruction for the monitoring operation to either the management server 20 or the communication controller 6. In response to receiving the above-described start instruction, the management server 20 or the communication controller 6 may start the monitoring operation of FIG. 6, the monitoring operation of FIGS. 9A and 9B, the monitoring operation of FIGS. 12A and 12B, or the monitoring operation of FIGS. 14A and 14B.

The management server 20, the communication controller 6, and the user terminal 30 may acquire key-ON data, key-OFF data, battery connection data, and battery disconnection data from the database of the management server 20 and perform a monitoring operation. Furthermore, in this case, the management server 20, the communication controller 6, and the user terminal 30 may determine whether or not the first time period and the second time period have elapsed from time information included in the key-OFF data, the battery connection data, and the battery disconnection data and the current time.

The features described in the above-described first to fourth example embodiments may be used as appropriate. For example, in order to determine whether or not the first time period has elapsed without detecting the connected state of the battery 4, as in the first example embodiment, steps S5 and S9 in the third example embodiment of FIGS. 12A and 12B and step S74 in the fourth example embodiment of FIGS. 14A and 14B may be omitted. Furthermore, steps S71, S72, and S37 to S39 in the fourth example embodiment of FIGS. 14A and 14B may be omitted.

The monitoring operation of FIGS. 12A and 12B may be performed by a controller mounted in or on the agricultural machine 1 other than the communication controller 6. Furthermore, alert information may be output from a plurality of user terminals 30.

Although each process, step, or the like in the above-described embodiments is implemented by processing circuitry including one or more processors and one or more memories, each process, step, or the like may be implemented by, for example, an integrated circuit in which at least one of various analog circuits or various digital circuits is incorporated instead of or in addition to the processing circuitry. Furthermore, the above-described processor is not limited to a CPU, and may be any of various processors suitable for computer control, such as a graphics processing unit (GPU), a digital signal processor (DSP), a field-programmable gate array (FPGA), and an application-specific integrated circuit (ASIC).

A plurality of physically separated processors may cooperate with one another to execute each process or the like. For example, processors respectively mounted in a plurality of physically separated computers may cooperate with one another via networks, such as a local area network (LAN), a wide area network (WAN), a mobile communication network, and the Internet, to execute each process or the like. Furthermore, a software program executed by the above-described processor may be installed from a server or the like into a memory via a network, or may be distributed while stored in a recording medium, such as a memory stick or a memory card, and installed from the recording medium into the memory of the processing circuitry.

Battery protection systems 100 according to example embodiments described above include features set forth in the following items and provide advantages.

[Item 1] A battery protection system 100 includes a controller 21, 6a, 31 configured or programmed to determine whether or not a first time period has elapsed with an agricultural machine 1 in a non-operating state, the agricultural machine 1 being configured to actuate at least one electrical component 6, 7, 8 (communication controller 6, information processor 7, other electrical component(s) 8) by electric power stored in a battery 4, and an output interface (user interface) 34 to, when the controller 21, 6a, 31 determines that the first time period has elapsed, output, to a user, alert information to prompt the user to electrically disconnect the at least one electrical component 6, 7, 8 and the battery 4.

Such a configuration according to item 1 described above allows the alert information to, even if the agricultural machine 1 is left unused for an extended period of time without operating, be output to the user before the battery 4 of the agricultural machine 1 is overdischarged. This enables the user to perform an operation of electrically disconnecting the battery 4 from the electrical component(s) 6, 7, 8, such as removing the electric wire L3 from the negative terminal (-) of the battery 4. Furthermore, since the alert information prompts the user to electrically disconnect the battery 4, rather than to charge the battery 4, wasteful consumption of electric power can be prevented or reduced. Thus, battery depletion in the agricultural machine 1 can be efficiently prevented.

[Item 2] In the battery protection system 100 according to item 1, the controller 21, 6a, 31 is configured or programmed to determine whether or not the first time period has elapsed since at least one of a prime mover 2 or an electric power generator 3 of the agricultural machine 1 entered the non-operating state, without the at least one of the prime mover 2 or the electric power generator 3 entering an operating state, the electric power generator 3 being configured to generate electric power to be stored in the battery 4.

Such a configuration according to item 2 described above allows the alert information to be output to the user when the first time period elapses while the battery 4 is not being charged. This enables the user to perform an operation of electrically disconnecting the battery 4 from the electrical component(s) 6, 7, 8. This can efficiently prevent battery depletion.

[Item 3] The battery protection system 100 according to item 1 further includes a key switch 5 to be operated to an ON state to cause the agricultural machine 1 to operate and to be operated to an OFF state to not cause the agricultural machine to operate, wherein the controller 21, 6a, 31 is configured or programmed to determine whether or not the first time period has elapsed since the key switch 5 was switched to the OFF state, without the key switch 5 being switched to the ON state.

Such a configuration according to item 3 described above facilitates determination of whether or not a state in which the agricultural machine 1 is not operating and the battery 4 is not being charged has continued for the first time period or more and allows the alert information to be appropriately output to the user if the state has continued for the first time period or more.

[Item 4] In the battery protection system 100 according to item 3, the controller 21, 6a, 31 is configured or programmed to determine whether or not the first time period has elapsed since the key switch 5 was switched to the OFF state with the battery 4 electrically connected to the at least one electrical component 6, 7, 8, without the battery 4 being electrically disconnected from the at least one electrical component 6, 7, 8 and without the key switch 5 being switched to the ON state.

Such a configuration according to item 4 described above can avoid unnecessary output of the alert information to the user while the battery 4 is in the electrically disconnected state, thus eliminating annoyance to the user.

[Item 5] In the battery protection system 100 according to item 3 or 4, the controller 21, 6a, 31 is configured or programmed to measure an elapsed time period that has elapsed since the key switch 5 was switched to the OFF state, and stop measuring the elapsed time period each of (i) when, while the key switch 5 is in the OFF state, the battery 4 enters a disconnected state in which the battery 4 is electrically disconnected from the at least one electrical component 6 to 8 and (ii) when the key switch 5 is switched to the ON state.

Such a configuration according to item 5 described above allows the controller(s) 21, 6a, 31 to monitor the duration of a state in which battery depletion is likely to occur and determine whether or not the duration is equal to or more than the first time period.

[Item 6] In the battery protection system 100 according to item 5, the controller 21, 6a, 31 is configured or programmed to measure an elapsed time period that has elapsed since the battery 4 entered a connected state from the disconnected state with the key switch 5 in the OFF state, the connected state being a state in which the battery 4 is electrically connected to the at least one electrical component 6 to 8, and determine whether or not the elapsed time period is equal to or more than the first time period.

With the configuration according to item 6, even if the battery 4 is once electrically disconnected and then connected again while the agricultural machine 1 in the non-operating state and thus enters a state in which battery depletion is likely to occur, it is possible to monitor the duration of such a state and allow the alert information to be output to the user when the duration is equal to or more than the first time period.

[Item 7] In the battery protection system 100 according to any one of items 3 to 6, the controller 21, 6a, 31 is configured or programmed to, after determining that the first time period has elapsed, cause the output interface 34 to output the alert information upon each elapse of a second time period while the battery 4 is connected to the at least one electrical component 6 to 8 and the key switch 5 is in the OFF state.

Such a configuration according to item 7 described above allows the alert information to be repeatedly output to the user, thus further prompting the user to electrically disconnect the battery 4. Furthermore, since the alert information is output at certain interval(s), annoyance to the user can be eliminated.

[Item 8] In the battery protection system 100 according to any one of items 1 to 7, the output interface 34 is configured to output the alert information including at least one of (i) an indication that the agricultural machine 1 has not been determined to be in an operating state for a certain period of time or (ii) an indication that the battery 4 is likely to be overdischarged.

Such a configuration according to item 8 described above makes it possible to further prompt the user to electrically disconnect the battery 4.

[Item 9] In the battery protection system 100 according to any one of items 1 to 8, the output interface 34 is configured to output the alert information including at least one of (i) an elapsed time period that has elapsed since the agricultural machine 1 entered the non-operating state or (ii) date and time at which the controller 21, 6a, 31 determined that the first time period elapsed.

Such a configuration according to item 9 described above allows the user to easily determine that battery depletion is likely to occur, thus further prompting the user to electrically disconnect the battery 4.

[Item 10] The battery protection system 100 according to any one of items 3 to 9 further includes a communication controller 6 provided in or on the agricultural machine 1 and configured or programmed to perform wireless communication, a terminal (user terminal) 30 including a user interface which is the output interface 34 and configured to be used by the user, and a server (management server) 20 including the controller 21 and configured to communicate with the communication controller 6 and the terminal 30, wherein the communication controller 6 is configured or programmed to transmit, to the server 20, key-ON data indicating that the key switch 5 provided in or on the agricultural machine 1 has been switched to the ON state and key-OFF data indicating that the key switch 5 has been switched to the OFF state, the controller 21 is configured or programmed to determine whether or not the first time period has elapsed since the server 20 received the key-OFF data without the server 20 receiving the key-ON data, and, when the first time period has elapsed, transmit the alert information from the server 20 to the terminal 30, and the terminal 30 is configured to receive the alert information and cause the user interface 34 to output the alert information.

Such a configuration according to item 10 described above allows the terminal 30 to, even if the user is at a location far from the agricultural machine 1, output the alert information to the user, thus prompting the user to electrically disconnect the battery 4 of the agricultural machine 1 from the electrical component(s) 6 to 8. Furthermore, since the server 20 performs monitoring of the first time period and transmission of the alert information, the electric power consumption of the battery 4 in the agricultural machine 1 in the non-operating state can be reduced.

[Item 11] The battery protection system 100 according to item 10 further includes an information processor 7 provided in or on the agricultural machine 1, wherein the information processor 7 is configured or programmed to transmit key-ON-detection information to the communication controller 6 when the key switch 5 is switched to the ON state, and transmit key-OFF-detection information to the communication controller 6 when the key switch 5 is switched to the OFF state, and the communication controller 6 is configured or programmed to transmit the key-ON data at least one of when the communication controller 6 receives a key-ON signal that the key switch 5 in the ON state outputs or when the communication controller 6 receives the key-ON-detection information, and transmit the key-OFF data at least one of when the communication controller 6 receives a key-OFF signal that the key switch 5 in the OFF state outputs or when the communication controller 6 receives the key-OFF-detection information.

Such a configuration according to item 11 described above enables reliable detection of the switched state of the key switch 5 through two systems, namely, a direct signal path from the key switch 5 to the communication controller 6 and an indirect signal path from the key switch 5 to the communication controller 6 via the information processor 7. Furthermore, since the communication controller 6 transmits the key-ON data in response to an output signal from the key switch 5 and also in response to output information from the information processor 7, and also transmits the key-OFF data in response to each of the output signal and the output information, the server 20 can reliably detect the key-ON data and the key-OFF data even if a temporary communication failure occurs between the communication controller 6 and the server 20. As a result, the server 20 can reliably determine that the first time period has elapsed while the key switch 5 of the agricultural machine 1 is in the OFF state (that is, with the agricultural machine 1 in the non-operating state), and the terminal 30 can output the alert information to the user.

[Item 12] In the battery protection system 100 according to item 10 or 11, the communication controller 6 is configured or programmed to transmit battery connection data indicating that the battery 4 is in a connected state in which the battery 4 is electrically connected to the at least one electrical component 6 to 8 and battery disconnection data indicating that the battery 4 is in a disconnected state in which the battery 4 is electrically disconnected from the at least one electrical component 6 to 8, and the controller 21 is configured or programmed to determine whether or not the first time period has elapsed since the server 20 received the key-OFF data without the server 20 receiving the key-ON data or the battery disconnection data.

Such a configuration according to item 12 described above allows the server 20 to detect that the first time period has elapsed while the key switch 5 of the agricultural machine 1 is in the OFF state and the battery 4 is in the connected state, and allows the terminal 30 to output the alert information to the user. Furthermore, this configuration can avoid unnecessary output of the alert information while the battery 4 is in the electrically disconnected state.

[Item 13] The battery protection system 100 according to item 12 further includes an information processor 7 provided in or on the agricultural machine 1, wherein the information processor 7 is configured or programmed to transmit disconnection-detection information to the communication controller 6 when the information processor 7 detects from a state of electric power supply from the battery 4 that the battery 4 is in the connected state, and transmit disconnection-detection information to the communication controller 6 when the information processor 7 detects from the state of electric power supply from the battery 4 that the battery 4 is in the disconnected state, and the communication controller 6 is configured or programmed to transmit the battery connection data at least one of when the communication controller 6 detects from the state of electric power supply from the battery 4 that the battery 4 is in the connected state or when the communication controller 6 receives the connection-detection information, and transmit the battery disconnection data at least one of when the communication controller 6 detects from the state of electric power supply from the battery 4 that the battery 4 is in the disconnected state or when the communication controller 6 receives the disconnection-detection information.

Such a configuration according to item 13 described above allows each of the electrically connected and disconnected states of the battery 4 to be reliably detected through two systems, namely, an electric power supply path from the battery 4 to the communication controller 6 and a signal path from the battery 4 to the communication controller 6 via the information processor 7. Furthermore, since the communication controller 6 transmits the battery connection data and the battery disconnection data based on the state of electric power supply from the battery 4 and information output from the information processor 7, the server 20 can reliably detect each of the electrically connected and disconnected states of the battery 4 even if a temporary communication failure occurs between the communication controller 6 and the server 20. As a result, the server 20 can reliably determine that the first time period has elapsed while the key switch 5 of the agricultural machine 1 is in the OFF state and the battery 4 is in the connected state, and the terminal 30 can output the alert information to the user.

[Item 14] In the battery protection system 100 according to any one of items 9 to 12, the controller 21 is configured or programmed to determine whether or not, after the server 20 received the key-ON data, a time condition is satisfied without the server 20 receiving the key-OFF data, and, when the time condition is satisfied, estimate that the key switch 5 has been switched to the OFF state and determine whether or not the first time period has elapsed.

With the configuration according to item 14, even if, after the server 20 receives the key-ON data from the communication controller 6, for example, the agricultural machine 1 moves to a place where the agricultural machine 1 cannot communicate with the server 20 and the server 20 does not receive the key-OFF data from the communication controller 6 anymore, the server 20 can estimate that the key switch 5 has been switched to the OFF state and enable the terminal 30 to output the alert information to the user after elapse of the first time period.

[Item 15] The battery protection system 100 according to any one of items 9 to 14 further includes an auxiliary battery 6e provided in or on the agricultural machine 1 and configured to supply electric power to the communication controller 6.

With the configuration according to item 15, even if the battery 4 is electrically disconnected and electric power is not supplied from the battery 4 to the communication controller 6, it is possible for the communication controller 6 to be actuated by electric power supplied from the auxiliary battery 6e and enable the communication controller 6 to transmit the key-OFF data, the battery disconnection data, and the like to the management server 20.

[Item 16] In the battery protection system 100 according to item 15, the auxiliary battery 6e is contained in the communication controller 6.

Such a configuration according to item 16 described above allows the auxiliary battery 6e to be efficiently used as a dedicated auxiliary power supply for the communication controller 6. Furthermore, the auxiliary battery 6e can be easily serviced during maintenance of the communication controller 6.

[Item 17] The battery protection system 100 according to any one of items 3 to 9 further includes a communication controller 6 provided in or on the agricultural machine 1 and configured or programmed to perform wireless communication, and a terminal 30 including a user interface which is the output interface 34 and configured to be used by the user, wherein the key switch 5 and the controller 6a are provided in or on the agricultural machine 1, the controller 6a is configured or programmed to cause the communication controller 6 to transmit the alert information when the first time period has elapsed since the key switch 5 was switched to the OFF state without the key switch 5 being switched to the ON state, and the terminal 30 is configured to receive the alert information and cause the user interface 34 to output the alert information.

With the configuration according to item 17, even when the user is at a location remote from the agricultural machine 1, it is possible for the terminal 30 to output the alert information to the user so as to prompt the user to electrically disconnect the battery 4 of the agricultural machine 1 from the electrical component(s) 6 to 8. Furthermore, since the controller 6a of the agricultural machine 1 performs monitoring of the switched state of the key switch 5 of the agricultural machine 1, monitoring of the first time period, and transmission of the alert information, the number of processing steps and the time required from when the key switch 5 is switched to the OFF state until the alert information is transmitted to the terminal 30 can be reduced.

[Item 18] The battery protection system 100 according to item 17 further includes an information processor 7 provided in or on the agricultural machine 1, wherein the key switch 5 is configured to output a key-ON signal to the controller 6a when the key switch 5 is in the ON state, and output a key-OFF signal to the controller 6a when the key switch 5 in the OFF state, and the information processor 7 is configured or programmed to detect from the key-ON signal that the key switch 5 has been switched to the ON state and transmit key-ON-detection information to the controller 6a, and detect from the key-OFF signal that the key switch 5 has been switched to the OFF state and transmit key-OFF-detection information to the controller 6a.

Such a configuration according to item 18 described above enables reliable detection of the switched state of the key switch 5 between the ON and OFF states through two systems, namely, a direct signal path from the key switch 5 to the controller 6a and an indirect signal path from the key switch 5 to the controller 6a via the information processor 7. As a result, the controller 6a can reliably determine that the first time period has elapsed while the key switch 5 is in the OFF state and cause the communication controller 6 to transmit the alert information, and the terminal 30 can receive the alert information and output the alert information to the user.

[Item 19] In the battery protection system 100 according to item 17 or 18, the controller 6a is configured or programmed to detect whether the battery 4 is in a connected state in which the battery 4 is electrically connected to the at least one electrical component 6 to 8 or in a disconnected state in which the battery 4 is electrically disconnected from the at least one electrical component 6 to 8, and, when the first time period has elapsed with the battery 4 in the connected state and the key switch 5 in the OFF state, cause the communication controller 6 to transmit the alert information.

Such a configuration according to item 19 described above allows the controller 6a to detect that the first time period has elapsed with the key switch 5 in the OFF state and the battery 4 in the connected state and allows the terminal 30 to output the alert information to the user. Furthermore, this configuration can avoid unnecessary output of the alert information while the battery 4 is in the electrically disconnected state.

[Item 20] The battery protection system 100 according to item 19 further includes an information processor 7 provided in or on the agricultural machine 1, wherein the information processor 7 is configured or programmed to transmit connection-detection information to the communication controller 6 when the information processor 7 detects from a state of electric power supply from the battery 4 that the battery 4 is in the connected state, and transmit disconnection-detection information to the communication controller 6 when the information processor 7 detects from the state of electric power supply from the battery 4 that the battery 4 is in the disconnected state, and the controller 6a is configured or programmed to detect whether the battery 4 is in the connected state or in the disconnected state from the connection-detection information or the disconnection-detection information, and detect whether the battery 4 is in the connected state or in the disconnected state from the state of electric power supply from the battery 4.

Such a configuration according to item 20 described above enables reliable detection of each of the electrically connected and disconnected states of the battery 4 through two systems, namely, the electric power supply path from the battery 4 to the communication controller 6 and the signal path from the battery 4 to the communication controller 6 via the information processor 7. As a result, the controller 6a can reliably determine that the first time period has elapsed while the key switch 5 of the agricultural machine 1 is in the OFF state and the battery 4 is in the connected state, and the terminal 30 can output the alert information to the user.

[Item 21] In the battery protection system 100 according to any one of items 17 to 20, the controller 6a is provided in the communication controller 6.

Such a configuration according to item 21 described above enables a reduction in the number of processing steps and the time required from when the key switch 5 is switched to the OFF state until the alert information is transmitted to the terminal 30.

[Item 22] The battery protection system 100 according to any one of items 3 to 9 further includes a communication controller 6 provided in or on the agricultural machine 1 and configured or programmed to perform wireless communication, and a terminal 30 including the controller 31 and a user interface which is the output interface 34 and configured to be used by the user, wherein the communication controller 6 is configured or programmed to transmit key-ON data indicating that the key switch 5 provided in or on the agricultural machine 1 has been switched to the ON state and key-OFF data indicating that the key switch 5 has been switched to the OFF state, and the controller 31 is configured or programmed to determine whether or not the first time period has elapsed since the terminal 30 received the key-OFF data without the terminal 30 receiving the key-ON data, and, when the first time period has elapsed, cause the user interface 34 to output the alert information.

With the configuration according to item 22, even when the user is at a location far from the agricultural machine 1, it is possible for the terminal 30 to output the alert information to the user so as to prompt the user to electrically disconnect the battery 4 of the agricultural machine 1 from the electrical component(s) 6 to 8. Furthermore, since the terminal 30 performs monitoring of the first time period and transmission of the alert information, the electric power consumption of the battery 4 in the agricultural machine 1 in the non-operating state can be reduced.

[Item 23] The battery protection system 100 according to item 22 further includes an information processor 7 provided in or on the agricultural machine and configured or programmed to transmit key-ON-detection information to the communication controller 6 when the key switch 5 is switched to the ON state, and transmit key-OFF-detection information to the communication controller 6 when the key switch 5 is switched to the OFF state, wherein the communication controller 6 is configured or programmed to transmit the key-ON data at least one of when the communication controller 6 receives a key-ON signal that the key switch 5 in the ON state outputs or when the communication controller 6 receives the key-ON-detection information, and transmit the key-OFF data at least one of when the communication controller 6 receives a key-OFF signal that the key switch 5 in the OFF state outputs or when the communication controller 6 receives the key-OFF-detection information.

Such a configuration according to item 23 described above enables reliable detection of the switched state of the key switch 5 through two systems, namely, the direct signal path from the key switch 5 to the communication controller 6 and the indirect signal path from the key switch 5 to the communication controller 6 via the information processor 7. Furthermore, since the communication controller 6 transmits the key-ON data in response to an output signal from the key switch 5 and also in response to output information from the information processor 7, and also transmits the key-OFF data in response to each of the output signal and the output information, the terminal 30 can reliably detect the key-ON data and the key-OFF data even if a temporary communication failure occurs during transmission of the data from the communication controller 6 or during reception of the data at the terminal 30. As a result, the terminal 30 can reliably determine that the first time period has elapsed while the key switch 5 of the agricultural machine 1 is in the OFF state and cause the user interface 34 to output the alert information to the user.

[Item 24] In the battery protection system 100 according to item 22 or 23, the communication controller 6 is configured or programmed to transmit battery connection data indicating that the battery 4 is in a connected state in which the battery 4 is electrically connected to the at least one electrical component 6 to 8 and battery disconnection data indicating that the battery 4 is in a disconnected state in which the battery 4 is electrically disconnected from the at least one electrical component 6 to 8, and the controller 31 is configured or programmed to determine whether or not the first time period has elapsed since the terminal 30 received the key-OFF data without the terminal 30 receiving the key-ON data or the battery disconnection data.

Such a configuration according to item 24 described above allows the terminal 30 to detect that the first time period has elapsed while the key switch 5 of the agricultural machine 1 is in the OFF state and the battery 4 is in the connected state and allows the user interface 34 to output the alert information to the user. Furthermore, this configuration can avoid unnecessary output of the alert information while the battery 4 is in the electrically disconnected state.

[Item 25] The battery protection system 100 according to item 24 further includes an information processor 7 provided in or on the agricultural machine 1, wherein the information processor 7 is configured or programmed to transmit connection-detection information to the communication controller 6 when the information processor 7 detects from a state of electric power supply from the battery 4 that the battery 4 is in the connected state, and transmit disconnection-detection information to the communication controller 6 when the information processor 7 detects from the state of electric power supply from the battery 4 that the battery 4 is in the disconnected state, and the communication controller 6 is configured or programmed to transmit the battery connection data at least one of when the communication controller 6 detects from the state of electric power supply from the battery 4 that the battery 4 is in the connected state or when the communication controller 6 receives the connection-detection information, and transmit the battery disconnection data at least one of when the communication controller 6 detects from the state of electric power supply from the battery 4 that the battery 4 is in the disconnected state or when the communication controller 6 receives the disconnection-detection information.

Such a configuration according to item 25 described above enables reliable detection of each of the electrically connected and disconnected states of the battery 4 through two systems, namely, the electric power supply path from the battery 4 to the communication controller 6 and the signal path from the battery 4 to the communication controller 6 via the information processor 7. Furthermore, since the communication controller 6 transmits the battery connection data and the battery disconnection data based on the state of electric power supply from the battery 4 and output information from the information processor 7, the terminal 30 can reliably detect each of the electrically connected and disconnected states of the battery 4 even if a temporary communication failure occurs at least one of during transmission of the data from the communication controller 6 or during reception of the data at the terminal 30. As a result, the terminal 30 can reliably determine that the first time period has elapsed while the key switch 5 of the agricultural machine 1 is in the OFF state and the battery 4 is in the connected state and cause the user interface 34 to output the alert information to the user.

[Item 26] In the battery protection system 100 according to any one of items 22 to 25, the controller 31 is configured or programmed to determine whether or not, after the terminal 30 received the key-ON data, a time condition is satisfied without the terminal 30 receiving the key-OFF data, and, when the time condition is satisfied, estimate that the key switch 5 has been switched to the OFF state and determine whether or not the first time period has elapsed.

With the configuration according to item 26, even if, after the terminal 30 receives the key-ON data from the communication controller 6, for example, the agricultural machine 1 moves to a place where the agricultural machine 1 cannot communicate with the terminal 30 and the terminal 30 does not receive the key-OFF data from the communication controller 6 anymore, it is possible for the terminal 30 to estimate that the key switch 5 has been switched to the OFF state and enable the terminal 30 to output the alert information after elapse of the first time period.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: agricultural machine
- 2: prime mover
- 3: electric power generator
- 4: battery
- 5: key switch
- 6: communication controller (electrical component)
- 6a: controller
- 6e: auxiliary battery
- 7: information processor (electrical component)
- 8: electrical component
- 20: management server
- 21: controller
- 30: user terminal
- 31: controller
- 34: user interface (output interface)
- 100: battery protection system

## Claims

1. A battery protection system comprising:
a controller configured or programmed to determine whether or not a first time period has elapsed with an agricultural machine in a non-operating state, the agricultural machine being configured to actuate at least one electrical component by electric power stored in a battery; and
an output interface to, when the controller determines that the first time period has elapsed, output, to a user, alert information to prompt the user to electrically disconnect the at least one electrical component and the battery.

2. The battery protection system according to claim 1, wherein the controller is configured or programmed to determine whether or not the first time period has elapsed since at least one of a prime mover or an electric power generator of the agricultural machine entered the non-operating state, without the at least one of the prime mover or the electric power generator entering an operating state, the electric power generator being configured to generate electric power to be stored in the battery.

3. The battery protection system according to claim 1, further comprising:
a key switch to be operated to an ON state to cause the agricultural machine to operate and to be operated to an OFF state to not cause the agricultural machine to operate; wherein
the controller is configured or programmed to determine whether or not the first time period has elapsed since the key switch was switched to the OFF state, without the key switch being switched to the ON state.

4. The battery protection system according to claim 3, wherein the controller is configured or programmed to determine whether or not the first time period has elapsed since the key switch was switched to the OFF state with the battery electrically connected to the at least one electrical component, without the battery being electrically disconnected from the at least one electrical component and without the key switch being switched to the ON state.

5. The battery protection system according to claim 3, wherein the controller is configured or programmed to:
measure an elapsed time period that has elapsed since the key switch was switched to the OFF state; and
stop measuring the elapsed time period each of (i) when, while the key switch is in the OFF state, the battery enters a disconnected state in which the battery is electrically disconnected from the at least one electrical component and (ii) when the key switch is switched to the ON state.

6. The battery protection system according to claim 5, wherein the controller is configured or programmed to:
measure an elapsed time period that has elapsed since the battery entered a connected state from the disconnected state with the key switch in the OFF state, the connected state being a state in which the battery is electrically connected to the at least one electrical component; and
determine whether or not the elapsed time period is equal to or more than the first time period.

7. The battery protection system according to claim 3, wherein the controller is configured or programmed to, after determining that the first time period has elapsed, cause the output interface to output the alert information upon each elapse of a second time period while the battery is connected to the at least one electrical component and the key switch is in the OFF state.

8. The battery protection system according to claim 1, wherein the output interface is configured to output the alert information including at least one of (i) an indication that the agricultural machine has not been determined to be in an operating state for a certain period of time or (ii) an indication that the battery is likely to be overdischarged.

9. The battery protection system according to claim 1, wherein the output interface is configured to output the alert information including at least one of (i) an elapsed time period that has elapsed since the agricultural machine entered the non-operating state or (ii) date and time at which the controller determined that the first time period elapsed.

10. The battery protection system according to claim 3, further comprising:
a communication controller provided in or on the agricultural machine and configured or programmed to perform wireless communication;
a terminal including a user interface which is the output interface and configured to be used by the user; and
a server including the controller and configured to communicate with the communication controller and the terminal; wherein
the communication controller is configured or programmed to transmit, to the server, key-ON data indicating that the key switch provided in or on the agricultural machine has been switched to the ON state and key-OFF data indicating that the key switch has been switched to the OFF state;
the controller is configured or programmed to determine whether or not the first time period has elapsed since the server received the key-OFF data without the server receiving the key-ON data, and, when the first time period has elapsed, transmit the alert information from the server to the terminal; and
the terminal is configured to receive the alert information and cause the user interface to output the alert information.

11. The battery protection system according to claim 10, further comprising an information processor provided in or on the agricultural machine; wherein
the information processor is configured or programmed to transmit key-ON-detection information to the communication controller when the key switch is switched to the ON state, and transmit key-OFF-detection information to the communication controller when the key switch is switched to the OFF state; and
the communication controller is configured or programmed to transmit the key-ON data at least one of when the communication controller receives a key-ON signal that the key switch in the ON state outputs or when the communication controller receives the key-ON-detection information, and transmit the key-OFF data at least one of when the communication controller receives a key-OFF signal that the key switch in the OFF state outputs or when the communication controller receives the key-OFF-detection information.

12. The battery protection system according to claim 10, wherein
the communication controller is configured or programmed to transmit, to the server, battery connection data indicating that the battery is in a connected state in which the battery is electrically connected to the at least one electrical component and battery disconnection data indicating that the battery is in a disconnected state in which the battery is electrically disconnected from the at least one electrical component; and
the controller is configured or programmed to determine whether or not the first time period has elapsed since the server received the key-OFF data without the server receiving the key-ON data or the battery disconnection data.

13. The battery protection system according to claim 12, further comprising an information processor provided in or on the agricultural machine; wherein
the information processor is configured or programmed to transmit connection-detection information to the communication controller when the information processor detects from a state of electric power supply from the battery that the battery is in the connected state, and transmit disconnection-detection information to the communication controller when the information processor detects from the state of electric power supply from the battery that the battery is in the disconnected state; and
the communication controller is configured or programmed to transmit the battery connection data at least one of when the communication controller detects from the state of electric power supply from the battery that the battery is in the connected state or when the communication controller receives the connection-detection information, and transmit the battery disconnection data at least one of when the communication controller detects from the state of electric power supply from the battery that the battery is in the disconnected state or when the communication controller receives the disconnection-detection information.

14. The battery protection system according to claim 10, wherein the controller is configured or programmed to determine whether or not, after the server received the key-ON data, a time condition is satisfied without the server receiving the key-OFF data, and, when the time condition is satisfied, estimate that the key switch has been switched to the OFF state and determine whether or not the first time period has elapsed.

15. The battery protection system according to claim 10, further comprising an auxiliary battery provided in or on the agricultural machine to supply electric power and configured to the communication controller.

16. The battery protection system according to claim 15, wherein the auxiliary battery is contained in the communication controller.

17. The battery protection system according to claim 3, further comprising:
a communication controller provided in or on the agricultural machine and configured or programmed to perform wireless communication; and
a terminal including a user interface which is the output interface and configured to be used by the user; wherein
the key switch and the controller are provided in or on the agricultural machine;
the controller is configured or programmed to cause the communication controller to transmit the alert information when the first time period has elapsed since the key switch was switched to the OFF state without the key switch being switched to the ON state; and
the terminal is configured to receive the alert information and cause the user interface to output the alert information.

18. The battery protection system according to claim 17, further comprising an information processor provided in or on the agricultural machine; wherein
the key switch is configured to output a key-ON signal to the controller and the information processor when the key switch is in the ON state, and output a key-OFF signal to the controller and the information processor when the key switch in the OFF state; and
the information processor is configured or programmed to detect from the key-ON signal that the key switch has been switched to the ON state and transmit key-ON-detection information to the controller, and detect from the key-OFF signal that the key switch has been switched to the OFF state and transmit key-OFF-detection information to the controller.

19. The battery protection system according to claim 17, wherein the controller is configured or programmed to detect whether the battery is in a connected state in which the battery is electrically connected to the at least one electrical component or in a disconnected state in which the battery is electrically disconnected from the at least one electrical component, and, when the first time period has elapsed with the battery in the connected state and the key switch in the OFF state, cause the communication controller to transmit the alert information.

20. The battery protection system according to claim 19, further comprising an information processor provided in or on the agricultural machine; wherein
the information processor is configured or programmed to transmit connection-detection information to the communication controller when the information processor detects from a state of electric power supply from the battery that the battery is in the connected state, and transmit disconnection-detection information to the communication controller when the information processor detects from the state of electric power supply from the battery that the battery is in the disconnected state; and
the controller is configured or programmed to detect whether the battery is in the connected state or in the disconnected state from the connection-detection information or the disconnection-detection information, and detect whether the battery is in the connected state or in the disconnected state from the state of electric power supply from the battery.

21. The battery protection system according to claim 17, wherein the controller is provided in the communication controller.

22. The battery protection system according to claim 3, further comprising:
a communication controller provided in or on the agricultural machine and configured or programmed to perform wireless communication; and
a terminal including the controller and a user interface which is the output interface and configured to be used by the user; wherein
the communication controller is configured or programmed to transmit key-ON data indicating that the key switch provided in or on the agricultural machine has been switched to the ON state and key-OFF data indicating that the key switch has been switched to the OFF state; and
the controller is configured or programmed to determine whether or not the first time period has elapsed since the terminal received the key-OFF data without the terminal receiving the key-ON data, and, when the first time period has elapsed, cause the user interface to output the alert information.

23. The battery protection system according to claim 22, further comprising an information processor provided in or on the agricultural machine; wherein
the information processor is configured or programmed to transmit key-ON-detection information to the communication controller when the key switch is switched to the ON state, and transmit key-OFF-detection information to the communication controller when the key switch is switched to the OFF state; and
the communication controller is configured or programmed to transmit the key-ON data at least one of when the communication controller receives a key-ON signal that the key switch in the ON state outputs or when the communication controller receives the key-ON-detection information, and transmit the key-OFF data at least one of when the communication controller receives a key-OFF signal that the key switch in the OFF state outputs or when the communication controller receives the key-OFF-detection information.

24. The battery protection system according to claim 22, wherein
the communication controller is configured or programmed to transmit battery connection data indicating that the battery is in a connected state in which the battery is electrically connected to the at least one electrical component and battery disconnection data indicating that the battery is in a disconnected state in which the battery is electrically disconnected from the at least one electrical component; and
the controller is configured or programmed to determine whether or not the first time period has elapsed since the terminal received the key-OFF data without the terminal receiving the key-ON data or the battery disconnection data.

25. The battery protection system according to claim 24, further comprising an information processor provided in or on the agricultural machine; wherein
the information processor is configured or programmed to transmit connection-detection information to the communication controller when the information processor detects from a state of electric power supply from the battery that the battery is in the connected state, and transmit disconnection-detection information to the communication controller when the information processor detects from the state of electric power supply from the battery that the battery is in the disconnected state; and
the communication controller is configured or programmed to transmit the battery connection data at least one of when the communication controller detects from the state of electric power supply from the battery that the battery is in the connected state or when the communication controller receives the connection-detection information, and transmit the battery disconnection data at least one of when the communication controller detects from the state of electric power supply from the battery that the battery is in the disconnected state or when the communication controller receives the disconnection-detection information.

26. The battery protection system according to claim 22, wherein the controller is configured or programmed to determine whether or not, after the terminal received the key-ON data, a time condition is satisfied without the terminal receiving the key-OFF data, and, when the time condition is satisfied, estimate that the key switch has been switched to the OFF state and determine whether or not the first time period has elapsed.
